# EUROPEAN PATENT SPECIFICATION

(11) **EP 2 383 815 B1**
(45) Date of publication and mention of the grant of the patent: **30.07.2014**
(21) Application number: 10735692.5
(22) Date of filing: 12.01.2010
(51) Int. Cl.: H01L 51/50, C09K 11/06

(54) **ORGANIC ELECTROLUMINESCENT ELEMENT, DISPLAY DEVICE, AND ILLUMINATION DEVICE**
ORGANISCHES ELEKTROLUMINESZENZELEMENT, ANZEIGEVORRICHTUNG UND BELEUCHTUNGSVORRICHTUNG
ÉLÉMENT ÉLECTROLUMINESCENT ORGANIQUE, DISPOSITIF D'AFFICHAGE ET DISPOSITIF D'ÉCLAIRAGE.

(30) Priority: 28.01.2009 JP 2009016571
(43) Date of publication of application: 02.11.2011
(73) Proprietor: Konica Minolta Holdings, Inc., Tokyo 100-0005 (JP)
(72) Inventor: NAKAYAMA Tomoyuki, Hino-shi Tokyo 191-8511 (JP); SUZURI Yoshiyuki, Hino-shi Tokyo 191-8511 (JP); ITOH Hiroto, Hino-shi Tokyo 191-8511 (JP)
(74) Representative: Gille Hrabal
(86) International application number: PCT/JP2010/050203
(87) International publication number: WO 2010/087222

(56) References cited:
- EP-A1- 1 722 603
- WO-A1-2008/140115
- WO-A1-2008/140115
- JP-A- 3 173 095
- JP-A- 5 182 763
- JP-A- 10 041 070
- JP-A- 10 144 473
- JP-A- 2002 308 855
- JP-A- 2003 123 967
- JP-A- 2003 123 967
- JP-A- 2005 100 897
- JP-A- 2005 100 897
- JP-A- 2006 228 861
- JP-A- 2008 066 569

## Description

### TECHNICAL FIELD

The present invention relates to an organic electroluminescence element, a display device, and a lighting device.

### BACKGROUND

Conventionally, an emission type electronic display device includes an electroluminescence display (hereinafter, referred to as an ELD). As a composing element of an ELD, there are cited an inorganic electroluminescence element (hereinafter, referred to as an inorganic EL element) and an organic electroluminescence element (hereinafter, referred to as an organic EL element).

An inorganic EL element has been utilized as a flat light source, however, it requires a high voltage of alternating current to operate an emission element.

On the other hand, an organic EL element is an element provided with a constitution comprising an light emitting layer containing a light emitting substance being sandwiched with a cathode and an anode, and an exciton is generated by an electron and a hole being injected into the emitting layer to be recombined, resulting light emission utilizing light release (fluorescence or phosphorescence) at the time of deactivation of said exciton; the light emission is possible at a voltage of approximately a few to a few tens volts, and an organic EL element is attracting attention with respect to such as wide viewing angle and high visual recognition due to a self-emission type as well as space saving and portability due to a completely solid element of a thin layer type.

Moreover, an organic EL device has a distinctive feature ofbeing a surface light, which is different from the main light sources, for example, a light-emitting diode and a cold cathode tube having been conventionally used. As applications which can effectively utilize this property, there are a light source for illumination and a back light of various displays. Especially, it is suitable to use as a back light of a liquid crystal full color display the demand of which has been increased remarkably in recent years.

When an organic EL element is used as a back light of a display or a light source for illumination as described above, there are required to have high storage stability, and little change of luminance and lifetime after prolonged storage, which are the problems to be solved.

Here, an organic EL element can be roughly divided into a polymer organic EL element and a small molecular organic EL element according to the material used in a light emitting layer.

As a production method of these organic EL elements, although there are a vacuum deposition method and a wet process (coating method), a wet process (a spin coat method, a cast method, an ink-jet method, a spray method, a printing method, a slot die coater method) has attracted attention in recent years for the reasons that a vacuum process is not needed, flow line production is simple, and a production rate can be made large. That is, also in the organic EL element produced by the wet process, it is required that it has high storage stability, and little change of luminance and lifetime after prolonged storage.

Generally, a coating type organic EL element uses a polymeric material in its light emitting layer (for example, refer to Patent document 1). However, with respect to a coating type organic EL element, there are concerns of properties and manufacturing stability from the reasons that it is difficult to purify the material and it is hard to control the molecular weight distribution. Therefore, in recent years, a small molecular organic EL element of coating type has attracted attention. A small molecular organic EL element formed by coating is disclosed (for example, refer to Patent document 2). There is provided a small molecular organic EL element having a good color purity and excellent in luminescent efficiency, luminance, and a half-life period.

However, in these embodiments, it was revealed the following problems: it is difficult to laminate a layer with keeping an adjacent layer interface to be flat without mixture of materials; and it may occur deterioration at an interface of the adjacent layer and a stable performance cannot be fully secured during storage at high temperature or for a long period of time.

### PRIOR ART DOCUMENTS

### PATENT DOCUMENTS

Patent document 1: Japanese Patent Application Publication (JP-A) No. 6-33048
Patent document 2: JP-A No. 2006-190759

WO 2008/140115 A relates to an organic EL element wherein the light emitting layer Is prepared with a solution coating method and does not contain crystal grains of the used host in the light emitting layer.

JP 2003/123967 A and JP 2005/100897 A relate to organic EL elements which do not contain a mixture of dopant and a host in the light emitting layer, As shown in Fig, 1 (a) and (d) of JP 2003/123967 A crystal grains are present in almost the whole light emitting layer. Accordingly, JP 2003/123967 does also not disclose to control the degree of crystallization of the host in a specific range. The same holds true for JP 2005/100897 A.

### SUMMARY OF THE INVENTION

### PROBLEMS TO BE SOLVED BY THE INVENTION

The present invention was made in view of the above-mentioned problems. An object of the present invention is to provide an organic EL element excellent in storage stability and showing little change of luminance and lifetime after prolonged storage, and to provide a display device and a lighting device which use this organic EL element.

### MEANS TO SOLVE THE PROBLEMS

An object of the present invention described above has been achieved by the following constitutions.
1. An organic electroluminescence element comprising an anode, a cathode and at least one light emitting layer sandwiched between the anode and the cathode as a constituting layer,
   wherein the light emitting layer contains a dopant and a host; crystal grains made of the host are contained in the light emitting layer; a part of the host is crystallized to form crystal grains; the crystal grains exhibit an X-ray diffraction peak; and a degree of crystallization of the crystal grains is 1 % to 15 %.
2. The organic electroluminescence element of the above-described item 1,
   wherein the host has a molecular weight of 1,500 or less.
3. The organic electroluminescence element of the above-described items 1 or 2,
   wherein the host has a molecular weight of 800 or less.
4. The organic electroluminescence element of any one of the above-described items 1 to 3,
   wherein the host is a compound containing at least three partial structures each represented by Formula (a). 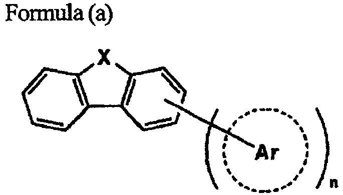 In Formula (a), X represents NR', O, S, CR'R", or SiR'R", provided that R' and R" each represents a hydrogen atom or a substituent Ar is a group of atoms necessary to form an aromatic ring. "n" is an integer of 0 to 8.
5. The organic electroluminescence element of any one of the above-described items 1 to 4,
   wherein the light emitting layer is formed by a wet process.
6. The organic electroluminescence element of any one of the above-described items 1 to 5,
   wherein at least one layer adjacent to the light emitting layer is contained, and the adjacent layer is formed by a wet method.
7. The organic electroluminescence element of any one of the above-described items 1 to 6,
   wherein two layers each respectively adjacent to one side of the light emitting layer are contained, and the two adjacent layers are formed by a wet method.
8. The organic electroluminescence element of any one of the above-described items 5 to 7, wherein the wet process is an ink-jet coating method.
9. The organic electroluminescence element of any one of the aforesaid items 5 to 7,
   wherein the wet process is an slot die coater method.
10. The organic electroluminescence element of any one of the above-described items 1 to 9,
   wherein the dopant contained in the light emitting layer emits phosphorescence.
11. The organic electroluminescence element of any one of the above-described items 1 to 10,
   wherein the dopant contained in the light emitting layer is represented by Formula (1). 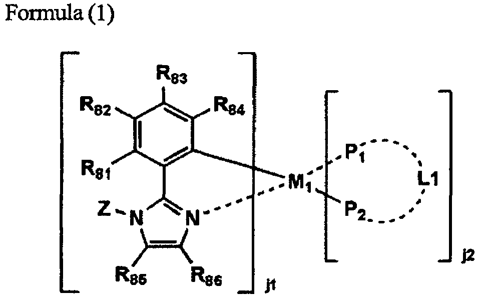 In Formula (1), Z represents a hydrocarbon ring group, an aromatic heterocyclic group, or a heterocyclic group. R₈₁ to R₈₆ each represent a hydrogen atom or a substituent. P₁-L1-P₂ represents a bidentate ligand, provided that P₁ and P₂ each independently represent a carbon atom, a nitrogen atom, or an oxygen atom. L1 represents an atomic group which forms a bidentate ligand together with P₁ and P₂. j1 is an integer of 1 to 3, and j2 is an integer of 0 to 2, provided that the sum of j1 and j2 is 2 or 3. M₁ represents a metal element of Group 8 to Group 10 in the periodic table.
12. The organic electroluminescence element of the above-described item 11,
   wherein M₁ in Formula (1) is iridium.
13. A display device comprising the organic electroluminescence element of any one of the above-described items 1 to 12.
14. A lighting device comprising the organic electroluminescence element of any one of the above-described items 1 to 12.

### EFFECTS OF THE INVENTION

By the present invention, it has been achieved to provide an organic electroluminescence element excellent in storage stability and showing little change of luminance and lifetime after prolonged storage, and to provide a display device and a lighting device which use this organic EL element. Namely, when the light emitting layer contains crystal grains, it is expected that the fluidity of the molecules will be lowered since the crystal grains in the layer have a certain amount of volume. This will suppress the turbulence at the interface with an adjacent layer and deterioration become difficult to occur in prolonged storing,.

### BRIEF DESCRIPTION OF THE DRAWINGS

Fig.1 is a schematic illustration diagram of a coating apparatus used in the present invention.
Fig. 2 is an enlarged side view illustration of the coating apparatus shown in Fig.1.
Fig. 3 is a schematic plan view of showing an example of an installation array of ink-jet heads.

### EMBODIMENTS TO CARRY OUT THE INVENTION

Each of the constituting elements of the organic EL element of the present invention will now be described in details.

### <<Constituting layers of Organic EL element>>

The constituting layers of the organic EL element of the present invention arc, for example: hole injection layer, electron injection layer, hole blocking layer, electron blocking layer, hole transporting layer, electron transporting layer, intermediate layer, and light emitting layer. Among them, preferred layer compositions will be described below, however, the present invention is not limited to these.
(i) Anode/hole transporting layer/ intermediate layer / light emitting layer/ electron transporting layer/ cathode
(ii) Anode/ hole transporting layer/ intermediate layer / light emitting layer/ hole blocking layer/ electron transporting layer/ cathode
(iii) Anode/ hole transporting layer/ intermediate layer / light emitting layer/ hole blocking layer/ electron transporting layer/ electron injection layer/ cathode
(iv) Anode/ hole injection layer/ hole transporting layer/ intermediate layer/ light emitting layer/ hole blocking layer/ electron transporting layer/ electron injection layer/ cathode

### <<Light emitting layer>>

The light emitting layer of the present invention is a layer, which emits light via recombination of electrons and holes injected. The light emission portion may be present either within the light emitting layer or at the interface between the light emitting layer and an adjacent layer thereof.

The light emitting layer of the present invention is not specifically limited with respect to its composition as long as it satisfies the requirements determined in the present invention.

The total thickness of the light emitting layer is not particularly limited. However, in view of the formed layer homogeneity, the minimization of application of unnecessary high voltage during light emission, and the stability enhancement of the emitted light color against the drive electric current, the layer thickness is regulated preferably in the range of 2 nm to 200 nm, more preferably in the range of 5 nm to 100 nm.

Although the light emitting layer in the organic electroluminescence element of the present invention can be formed by either a vacuum deposition method or a wet process, it is preferably fonned by a wet process. Examples of a wet process used in the present invention are: a spin coat method, a cast method, an ink-jet method, a spray method, a printing method, and a slot die coater method. In the present invention, from the viewpoints of easily obtaining homogeneous membrane and hardly generating a pinhole, it is especially preferable to carry out film forming by using a coating method such as an ink-jet method, a printing method, or a slot die coater method.

In the present invention, the light emitting layer contains a dopant and a host. By this composition, it can be improved luminance and emission quantum efficiency to result in achieving high quality. In the following, the host (it is also called as a host compound) and the dopant will be described.

### (Hosts)

"Hosts", as described in the present invention, are defined as compounds, incorporated in a light emitting layer, which have a phosphorescent quantum yield at room temperature (25 °C) of less than 0.1, and more preferably less than 0.01.

Further, among compounds incorporated in the light emitting layer, it is preferable that the host is contained in the mass ratio in the aforesaid layer of at least 20%.

Structures of the hosts employed in the present invention are not particularly limited. The conventionally known host compounds in organic EL elements can be used. A host used in the present invention is preferably a compound having a hole transporting ability and an electron transporting ability, as well as having a large excited triplet energy level and a high Tg (a glass transition temperature).

Further, the plural host may be used in combination with. It is possible to control the transportation of charge carriers by making use of a plurality of host compounds, which results in high efficiency of an organic EL element. In addition, it is possible to mix a different emission lights by making use of a plurality of phosphorescent dopants as described below. Any required emission color can be obtained thereby.

Further, as a host used in the present invention, it may be either a polymer compound or a small molecular compound. Among small molecular compound, it may be a compound provided with a polymerizing group such as a vinyl group and an epoxy group. These compounds may be used singly or in combination of two or more compounds. Preferably, the molecular weight is 1,500 or less, and more preferably, it is 800 or less.

A part of host used in the light emitting layer is crystallized in the light emitting layer. In that case, there are observed X-ray diffraction peaks by the crystal grains.

Although host compounds preferably used in the present invention are shown below, the present invention is not limited to these.

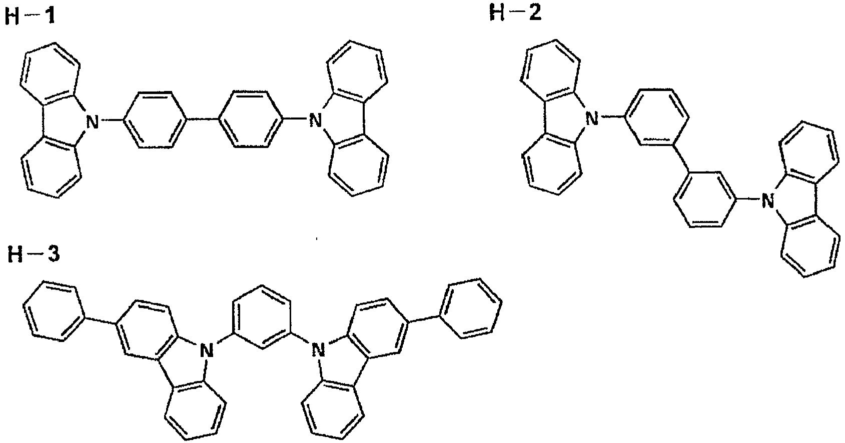

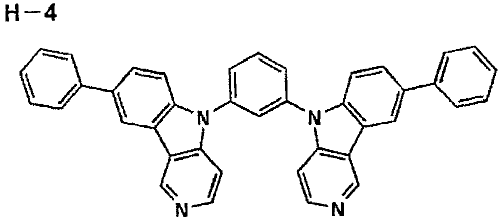

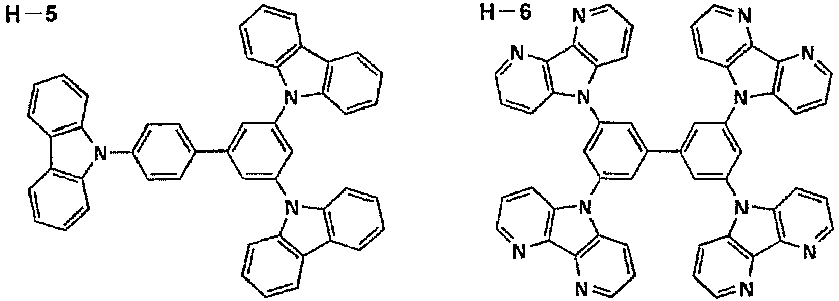

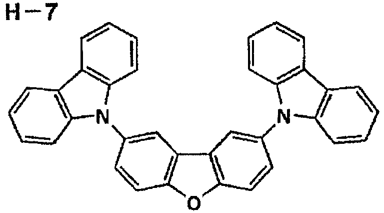

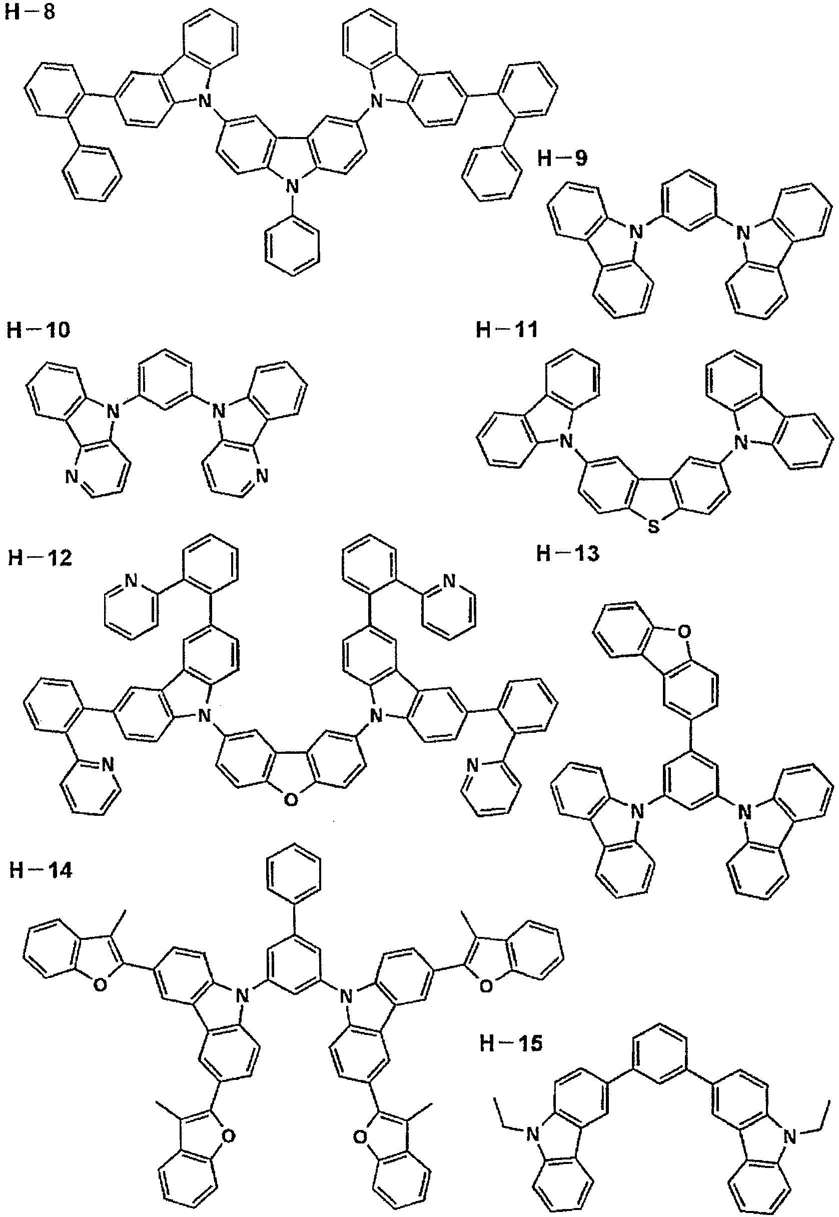

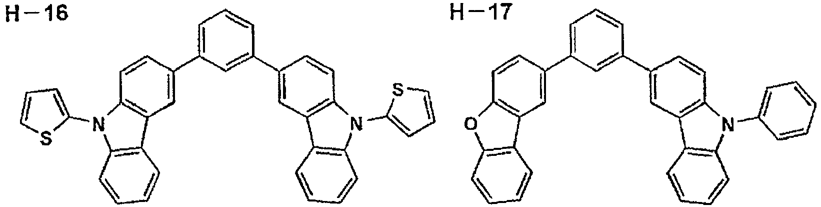

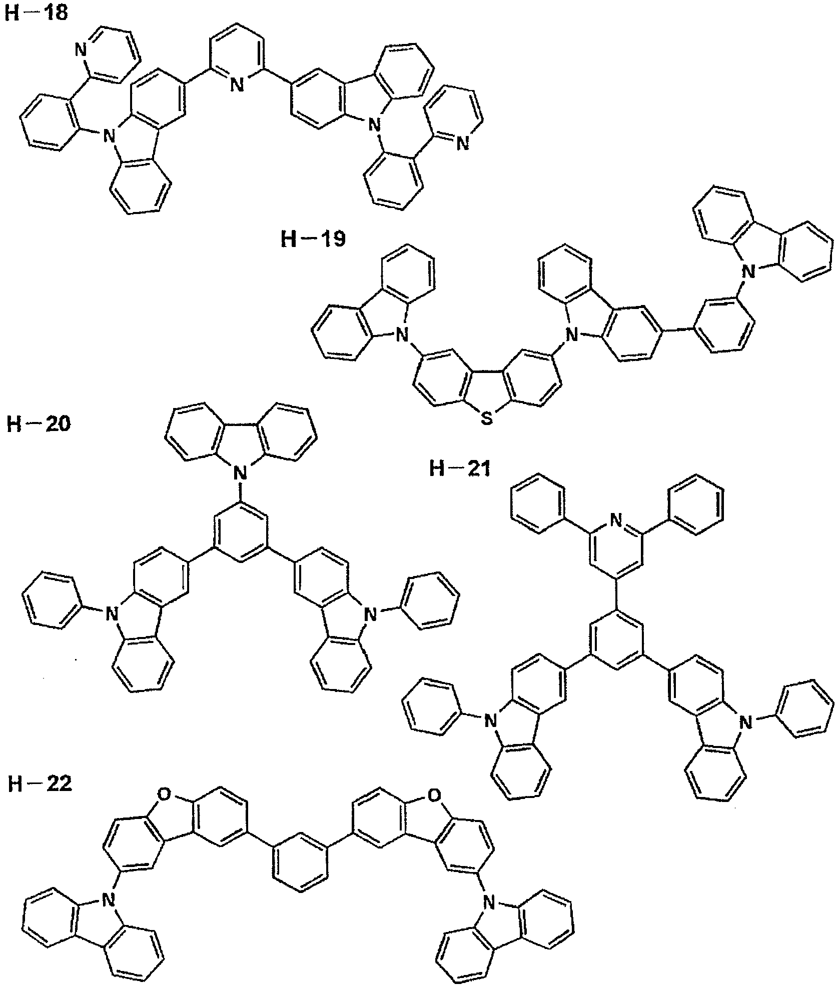

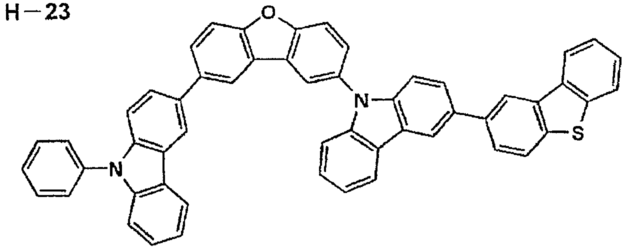

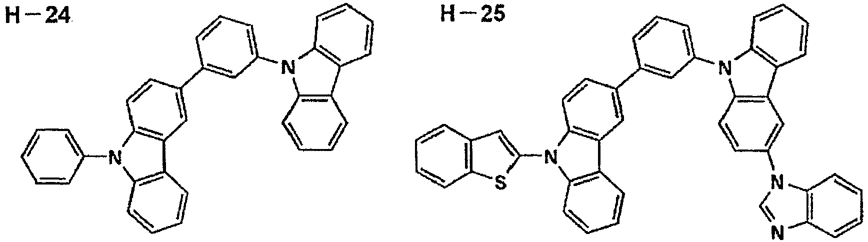

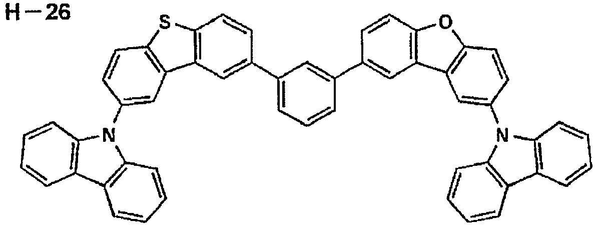

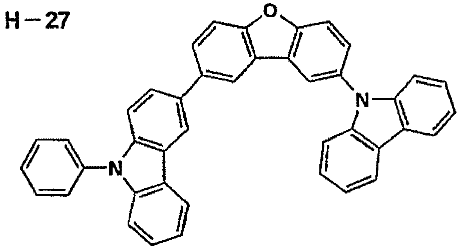

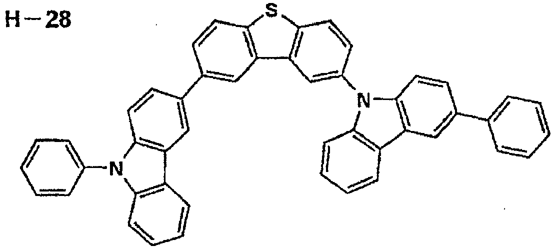

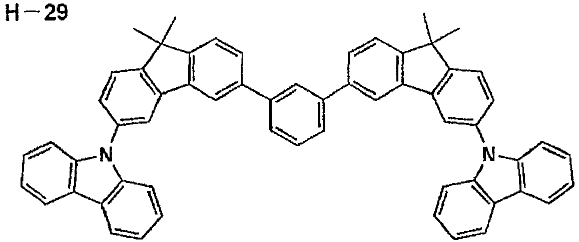

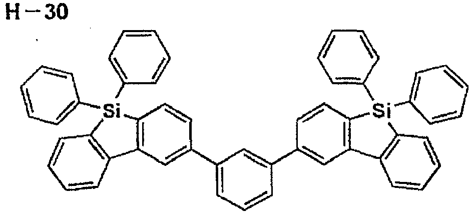

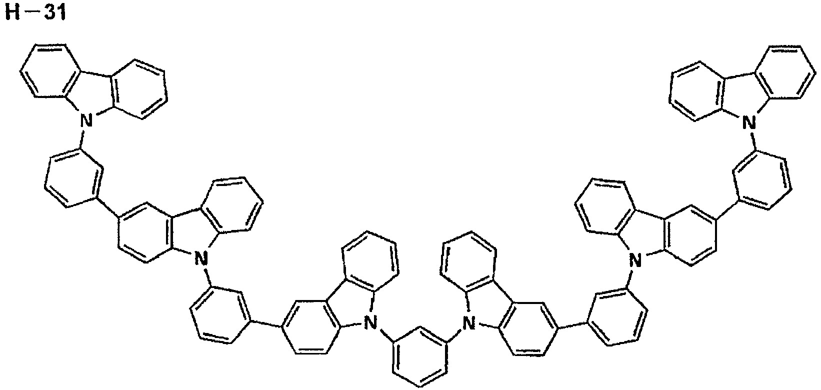

As specific known examples of a host compound, other than the compounds described-above, the compounds described in the following Documents are cited.

For example, JP-A Nos. 2001-257076, 2002-308855, 2001-313179, 2002-319491, 2001-357977, 2002-334786, 2002-8860, 2002-334787, 2002-15871, 2002-334788, 2002-43056, 2002-334789, 2002-75645, 2002-338579, 2002-105445, 2002-343568, 2002-141173, 2002-352957, 2002-203683, 2002-363227, 2002-231453, 2003-3165, 2002-234888, 2003-27048, 2002-255934, 2002-260861,2002-280183,2002-299060, 2002-302516, 2002-305083, 2002-305084 and 2002-308837.

Especially, as a host compound concerning the present invention, it is preferable to use a host compound which has at least three or more partial structures represented by the above-mentioned Formula (a). Three or more partial structures may be combined in the part of X, and they may be combined in other parts.

### <<Partial structure represented by Formula (a)>>

A partial structure represented by Formula (a) will be described.

Examples of a substituent represented by R' and R" for X in a partial structure represented by Formula (a) include: an alkyl group (for example, a methyl group, an ethyl group, a propyl group, an isopropyl group, a tert-butyl group, a pentyl group, a hexyl group, an octyl group, a dodecyl group, a tridecyl group, a tetradecyl group, and a pentadecyl group); a cycloalkyl group (for example, a cyclopentyl group, and a cyclohexyl group); an alkenyl group (for example, a vinyl group and an allyl group); an alkynyl group (for example, an ethynyl group and a propargyl group); an aromatic hydrocarbon ring group (also called an aromatic carbon ring or an aryl group, for example, a phenyl group, a p-chlorophenyl group, a mesityl group, a tolyl group, a xylyl group, a naphthyl group, an anthryl group, an azulenyl group, an acenaphthenyl group, a fluorenyl group, a phenantolyl group, an indenyl group, a pyrenyl group, and a biphenyryl group); an aromatic heterocyclic group (for example, a pyridyl group, a pyrazyl group, a pyrimidinyl group, a triazyl group, a furyl group, a pyrrolyl group, an imidazolyl group, a benzoimidazolyl group, a pyrazolyl group, a pyradinyl group, a triazolyl group (for example, 1,2,4-triazole-1-yl group and 1,2,3-triazole-1-yl group), an oxazolyl group, a benzoxazolyl group, a thiazolyl group, an isooxazolyl group, an isothiazolyl group, a furazanyl group, a thienyl group, a quinolyl group, abenzofuryl group, a dibenzofuryl group, a benzothienyl group, a dibenzothenyl group, an indolyl group, a carbazolyl group, an azacarbazolyl group (indicating a ring structure in which one or more of the carbon atoms constituting the carbazolyl group are replaced with nitrogen atoms), a quinoxalinyl group, a pyridazinyl group, a triazinyl group, a quinazolinyl group, a phthalazinyl group); a heterocyclic group (for example, a pyrrolidyl group, an imidazolidyl group, a morpholyl group, and an oxazolidyl group); an alkoxyl group (for example, a methoxy group, an ethoxy group, a propyloxy group, a pentyloxy group, an hexyloxy group, an octyloxy group, and a dodecyloxy group); a cycloalkoxy group (for example, a cyclopentyloxy group and a cyclohexyloxy group); an aryloxy group (for example, a phenoxy group and a naphthyloxy group); an alkylthio group (for example, a methylthio group, an ethylthio group, a propylthio group, a pentylthio group, a hexylthio group, an octylthio group, and a dodecylthio group); a cycloalkylthio group (for example, a cyclopentylthio group and a cyclohexylthio group); an arylthio group (for example, a phenylthio group and a naphthylthio group); an alkoxycarbonyl group (for example, a methyloxycarbonyl group, an ethyloxycarbonyl group, a butyloxycarbonyl group, an octyloxycarbonyl group, and a dodecyloxycarbonyl group); an aryloxycarbonyl group (for example, a phenyloxycarbonyl group and a naphthyloxycarbonyl group); a sulfamoyl group (for example, an aminosulfonyl group, a methylaminosulfonyl group, a dimethylaminosulfonyl group, a butylaminosulfonyl group, a hexylaminosulfonyl group, a cyclohexylaminosulfonyl group, an octylaminosulfonyl group, a dodecylaminosulfonyl group, a phenylaminosulfonyl group, a naphthylaminosulfonyl group, and a 2-pyridylaminosulfonyl group); an acyl group (for example, an acetyl group, an ethylcarbonyl group, a propylcarbonyl group, a pentylcarbonyl group, a cyclohexylcarbonyl group, an octylcarbonyl group, a 2-ethylhexylcarbonyl group, a dodecylcarbonyl group, a phenylcarbonyl group, a naphthylcarbonyl group, and a pyridylcarbonyl group); an acyloxy group (for example, an acetyloxy group, an ethylcarbonyloxy group, a butylcarbonyloxy group, an octylcarbonyloxy group, a dodecylcarbonyloxy group, and a phenylcarbonyloxy group); an amido group (for example, a methylcarbonylamino group, an ethylcarbonylamino group, a dimethylcarbonylamino group, a propylcarbonylamino group, a pentylcarbonylamino group, a cyclohexylcarbonylamino group, a 2-ethylhexylcarbonylamino group, an octylcarbonylamino group, a dodecylcarbonylamino group, a phenylcarbonylamino group, and a naphthylcarbonylamino group); a carbamoyl group (for example, an aminocarbonyl group, a methylaminocarbonyl group, a dimethylaminocarbonyl group, a propylaminocarbonyl group, a pentylaminocarbonyl group, a cyclohexylaminocarbonyl group, an octylaminocarbonyl group, a 2-ethylhexylaminocarbonyl group, a dodecylaminocarbonyl gropup, a phenylaminocarbonyl group, a naphthylaminocarbonyl group, and a 2-pyridylaminocarbonyl group); a ureido group (for example, a methylureido group, an ethylureido group, a pentylureido group, a cyclohexylureido group, an octylureido group, a dodecylureido group, a phenylureido group, a naphthylureido group, and a 2-oyridylaminoureido group); a sulfinyl group (for example, a methylsulfinyl group, an ethylsulfinyl group, a butylsulfinyl group, a cyclohexylsulfinyl group, a 2-ethylhexylsulfinyl group, a dodecylsulfinyl group, a phenylsulfinyl group, a naphthylsulfinyl group, and a 2-pyridylsulfinyl group); an alkylsulfonyl group (for example, a methylsulfonyl group, an ethylsulfonyl group, a butylsulfinyl group, a cyclohexylsulfonyl group, a 2-ethylhexylsulfonyl group, and a dodecylsulfonyl group, an arylsulfonyl group or a heteroarylsulfonyl group (for example, a phenylsulfonyl group, a naphthylsulfonyl group, and a 2-pyridylsulfonyl group); an amino group (for example, an amino group, an ethylamino group, a dimethylamino group, a butylamino group, a cyclopentylamino group, a dodecylamino group, an anilino group, a naphthylamino group, and a 2-pyridylamino group); a cyano group; a nitro group; a hydroxyl group; a mercapto group; and a silyl group (for example, a trimethylsilyl group, a triisopropylsilyl group, a triphenylsilyl group, and a phenyldiethylsilyl group). These groups may be further substituted with the above-described groups. Plurality of these groups may join each other to form a ring.

Among these, X is preferably NR' or O, and R' is preferably an aromatic hydrocarbon group or an aromatic heterocyclic group. Specifically preferable examples of aromatic hydrocarbon ring group (it is called an aromatic hydrocarbon group or an aryl group) include: a phenyl group, p-chlorophenyl group, a mesityl group, a tolyl group, a xylyl group, a naphthyl group, an anthryl group, a azulenyl group, a acenaphthenyl group, a fluorenyl group, a phenanthryl group, an indenyl group, a pyrenyl group and a biphenylyl group. Specifically preferable examples of an aromatic heterocycle include: a furyl group, a thienyl group, a pyridyl group, a pyridazinyl group, a pyrimidinyl group, a pyrazinyl group, a triazinyl group, an imidazolyl group, a pyrazolyl group, a thiazolyl group, a quinazolinyl group and a phthalazinyl group.

The above-described aromatic hydrocarbon groups and an aromatic heterocyclic groups may further have a substituent represented by R' and R" for X in a partial structure represented by Formula (a).

In a partial structure represented by Formula (a), as an aromatic ring represented by Ar, there can be cited an aromatic hydrocarbon group and an aromatic heterocyclic group. The aromatic ring may be a single ring or a condensed ring, and it may be unsubstituted or it may be substituted with a substituent represented by R' and R" for X in a partial structure represented by Formula (a).

In Formula (a), examples of an aromatic hydrocarbon ring represented by Ar include: a benzene ring, a biphenyl ring, a naphthalene ring, an azulene ring, an anthracene ring, a phenanthrene ring, a pyrene ring, a chrysene ring, a naphthacene ring, a triphenylene ring, o-terphenyl ring, m-terphenyl ring, p-terphenyl ring, an acenaphthene ring, a coronene ring, a fluorene ring, a fluoanthrene ring, a naphthacene ring, a pentacene ring, a perylene ring, a pentaphene ring, a picene ring, a pyrene ring, a pyranthrene ring and an anthraanthrene ring. These rings may further have a substituent represented by R' and R" for X in a partial structure represented by Formula (a).

In Formula (a), examples of an aromatic heterocyclic ring represented by Ar include: a furan ring, a dibenzofuran ring, a thiophene ring, an oxazole ring, a pyrrole ring, a pyridine ring, a pyridazine ring, a pyrimidine ring, a pyrazine ring, a triazine ring, a benzimidazole ring, an oxadiazole ring, a triazole ring, an imidazole ring, a pyrazole ring, a thiazole ring, an indole ring, an indazole ring, a benzimidazole ring, a benzothiazole ring, a benzoxazole ring, a quinoxaline ring, a quinazoline ring, a cinnoline ring, a quinoline ring, an isoquinoline ring, a phthalazine ring, a naphthyridine ring, a carbazole ring, a carboline ring, and a diazacarbazole ring (indicating a ring structure in which at least one of the carbon atoms constituting the carboline ring is replaced with a nitrogen atom). These rings may further have a substituent represented by R' and R" for X in a partial structure represented by Formula (a).

These rings may further have a substituent represented by R' and R" for X in a partial structure represented by Formula (a).

Among the rings described above, preferably used aromatic rings which are represented by Ar are: a carbazole ring, a carboline ring, a dibenzofuran ring, and a benzene ring. More preferably used aromatic rings are: a carbazole ring, a carboline ring, and a benzene ring. Still more preferably used aromatic ring is a benzene ring having a substituent. Especially, a benzene ring having a carbazolyl group is most preferably used.

In Formula (a), as an aromatic ring represented by Ar, a ring condensed with three or more rings is one of the preferable embodiments. Specific examples of an aromatic hydrocarbon condensed ring of three or more rings include: a naphthacene ring, an anthracene ring, a tetracene ring, a pentacene ring, a hexacene ring, a phenanthrene ring, a pyrene ring, a benzopyrene ring, a benzoazulene ring, a chrysene ring, a benzochrysene ring, an acenaphthene ring, an acenaphthylene ring, a triphenylene ring, a coronene ring, a benzocoronene ring, a hexabenzocorone ring, a fluorene ring, a benzofluorene ring, a fluoranthene ring, a perylene ring, a naphthoperylene ring, a pentabenzoperylene ring, a benzoperylene ring, a pentaphene ring, a picene ring, a pyranthrene ring, a coronene ring, a naphthocoronene ring, an ovalene ring, and an anthraanthrene ring.

In addition, these rings may further have the above-described substituents.

Further, specific examples of an aromatic heterocyclic ring condensed with three or more rings include: an acridine ring, a benzoquinoline ring, a carbazole ring, a carboline ring, a phenazine ring, a phenanthridine ring, a phenanthroline ring, a carboline ring, a cycladine ring, a quindoline ring, a thebenidine ring, a quinindoline ring, a triphenodithiazine ring, a triphenodioxazine ling, a phenanthrazine ring, an anthrazine ring, a perimizine ring, an diazacarbazole ring (indicating a ring structure in which arbitral one carbon atom constituting the carbazole ring is replaced with a nitrogen atom), a phenanthroline ring, a dibenzofuran ring, a dibenzothiophene ring, a naphthofuran ring, a naphthothiophene ring, a benzodifuran ring, a benzodithiophene ring, a naphthodifuran ring, a naphthodithiophene ring, an anthrafuran ring, an anthradifuran ring, an anthrathiophene ring, an anthradithiophene ring, a thianthrene ring, a phenoxathiine ring, and a thiophanthrene ling (naphthothiophene ring). These rings may further have a substituent.

In Formula (a), "n" represents an integer of 0 to 8. Preferably, it is 0 to 2. Especially, when X is O or S, it is preferably 1 or 2.

### <<Host compounds represented by Formulas (a-1), (a-2), or (a-3)>>

A host compound according to the present invention contains at least three partial structures represented by the above-described Formula (a). Preferable embodiments are compounds represented by Formulas (a-1), (a-2), or (a-3) as described below.

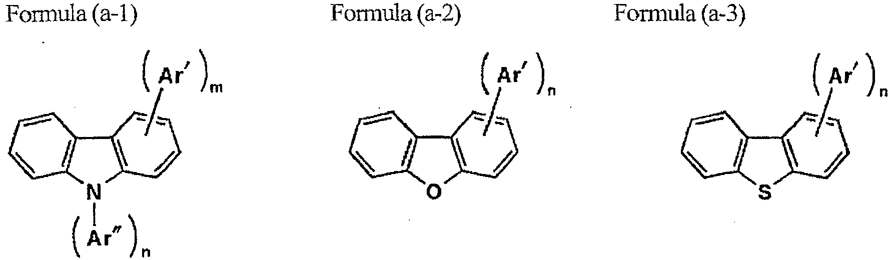

In Formulas, Ar' and Ar" each represents an aromatic ring. The aforesaid aromatic ring indicates the synonymous aromatic ring represented by Ar in Formula (a). "n" represents an integer of 1 or more, and "m" represents an integer of o or more.

### <<Crystal gains>>

The crystal grains concerning the present invention will be described.

The crystal grains which exist in the light emitting layer of the organic EL element of the present invention are formed of either a host, a dopant or a mixture of this host and this dopant, and X-ray diffraction peaks by these crystal grains are observed.

As crystal grains concerning the present invention, it is desirable that the crystal grains are formed of a host.

As a way of generating crystal grams in a light emitting layer, it can be formed by tuning the conditions, such as: the properties and the purity of the host or the dopant to be used; the properties of the adjacent layer material; the partial pressure of plural gases in the case of the vacuum evaporation film forming method; sublimation temperature of the materials; and the properties of the solvent which is used in the case of the wet process method. But, the production ways and the production conditions cannot generally be specified.

However, since the crystal particle formation in a light emitting layer is crystallizing a part of materials used for the light emitting layer at the time of film forming, or after forming the film until the completion of device production, it is needless to say that the various ways of crystal particle formation based on a well-known crystal growth theory can be applied to the crystal particle formation itself of the present invention.

It can be formed crystal grains concerning the present invention by applying so-called an epitaxial growth method in which the stacking tendency of a subtrate is used, or by applying a membrane heat-treating method to heat the film at the temperature higher than the glass transition temperature of the materials used.

Furthermore, in the vacuum deposition method, it can be suitably applied the approaches, for example: such as a low-speed film forming method, or concomitant use of it and the above-mentioned methods. Moreover, when using the wet process method, crystallization can also be controlled by controlling the supersaturation during in film coating.

Specifically, it is the optimization of the solvents used, or the optimal control of the temperature at the time of coating or drying. As a simple approach, when coating with a spin coat method, it is also possible to adjust degree of crystallization depending on material by controlling the rotational speed to control substantially the drying rate of coated film, for example.

When these methods are applied to production of an organic electroluminescence element, it is evident that it is required to optimize according to the object so that many performances of an organic electroluminescence element may not be spoiled.

For X-ray diffraction measurement, it can be used a thin film structure evaluation apparatus ATX-G (made by RIGAKU Co., Ltd.), for example. The measurement conditions are shown below. X-rays were generated using copper as a target at a power of 15 kW. The measurement was done using a slit collimation optical configuration. The X-rays were made into a collimated beam and it was allowed to enter at a low incident angle of about the total reflection critical angle. The penetration depth of the X-rays was adjusted to be equivalent with the film thickness.

In the present invention, the incident angle θ was set to be 0.23°. The incident angle was kept constant and the detector was scanned with setting 2θ = 5° to 45°. Thus, the X-ray intensity was measured.

Moreover, the degree of crystallization is preferably in the range of 1% to 15%. The effects of the present invention are effectively shown when the degree of crystallization is in this range. In this case, the voltage given in order to make a light emitting layer emit light can be restrained low, as a result, deterioration of luminescent ability can be prevented, and the storage stability of the organic EL element is improved. Here, the degree of crystallization was defined as a rate of the crystalline diffraction peaks among the total X-ray scattering strength.

### (Dopants)

Next, a dopant will be described.

There are two kinds of light emitting principles in a dopant-host system. One is an energy transfer type, wherein carriers recombine on a host compound on which the carriers are transferred to produce an excited state of the host compound, and then via transfer of this energy to a dopant, emission from the dopant is realized. The other is a carrier trap type, wherein a dopant serves as a carrier trap and then carriers recombine on the dopant to generate emission from the dopant.

Moreover, as a requirement which can easily carry out energy transfer in an energy transfer type, it is preferable that the overlap integral of luminescence of a host and absorption of a dopant is large. In a carrier trap type, it is required to satisfy the energy relationship which can easily carry out a carrier trap. For example, with respect to an electron carrier trap, it is required that an electron affinity (LUMO level) of a dopant is larger than an electron affinity (LUMO level) of a host. Conversely, with respect to a hole carrier trap, it is required that an ionization potential (HOMO) of a dopant is smaller than an ionization potential (HOMO) of a host.

From this, a dopant is selected from dopant compounds by considering an emitting color including color purity and light emitting efficiency, and a host compound is selected from compounds which exhibits good carrier transport ability and further satisfies the above-described relationship.

Although a dopant in a light emitting layer can be chosen arbitrary from the known dopants used as a dopant of an organic EL element, it is preferable that it is an organic compound or a complex compound which carries out phosphorescent luminescence, or fluorescent luminescence.

As typical examples of fluorescent dopants, there can be listed: compounds exhibiting a high fluorescent quantum efficiency such as laser dyes, coumarin based dyes, pyran based dyes, cyanine based dyes, croconium based dyes, squarylium based dyes, oxobenzanthracene based dyes, fluorescein based dyes, rhodamine based dyes, pyrylium based dyes, perylene based dyes, stilbene based dyes, polythiophene based dyes, and rare earth complex based fluorescent materials.

The phosphorescent dopant is a compound, wherein emission from an excited triplet state thereof is observed, specifically, emitting phosphorescence at room temperature (25 °C) and exhibiting a phosphorescence quantum yield of at least 0.01 at 25°C. The phosphorescence quantum yield is preferably at least 0.1.

The phosphorescence quantum yield can be determined via a method described in page 398 of Bunko II of Dai 4 Han Jikken Kagaku Koza 7 (Spectroscopy II of 4th Edition Lecture of Experimental Chemistry 7) (1992, published by Maruzen Co., Ltd.). The phosphorescence quantum yield in a solution can be determined using appropriate solvents. However, it is only necessary for the phosphorescent dopant of the present invention to exhibit the above phosphorescence quantum yield using any of the appropriate solvents.

Preferable phosphorescence dopants relating to the present invention are complex compounds containing a metal of Group 8 to Group 10 in the periodic table. More preferably, they are: indium compounds, osmium compound, europium compounds, platinum compounds (platinum complex compounds) and rare earth compounds. Among them, most preferable compounds are iridium compounds.

As more preferable phosphorescent dopants according to the present invention, it may be cited compounds represented by the above-described Formula (1). Specifically, the compounds disclosed in the following patent documents are cited.

WO 00/70655 pamphlet, JP-A Nos. 2002-280178,2001-181616,2002-280179,2001-181617, 2002-280180, 2001-247859, 2002-299060, 2001-313178, 2002-302671, 2001-345183 and 2002-324679, WO 02/15645 pamphlet, JP-A Nos. 2002-332291, 2002-50484, 2002-322292 and 2002-83684, Japanese Translation of PCT International Application Publication No. 2002-540572, JP-A Nos. 2002-117978, 2002-338588, 2002-170684 and 2002-352960, WO 01/93642 pamphlet, JP-A Nos. 2002-50483, 2002-100476, 2002-173674, 2002-359082, 2002-175884, 2002-363552,2002-184582 and 2003-7469, Japanese Translation of PCT International Application Publication No. 2002-525808, JP-A 2003-7471, Japanese Translation of PCT International Application Publication No. 2002-525833, JP-A Nos. 2003-31366, 2002-226495, 2002-234894, 2002-235076, 2002-241751, 2001-319779, 2001-319780,2002-62824,2002-100474,2002-203679,2002-343572 and 2002-203678.

Specific examples of a phosphorescent dopant are shown below, however, the present invention is not limited to them.

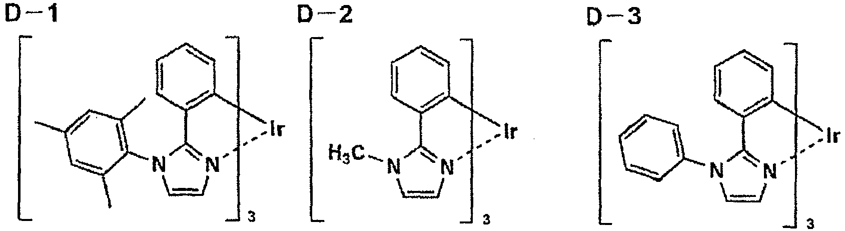

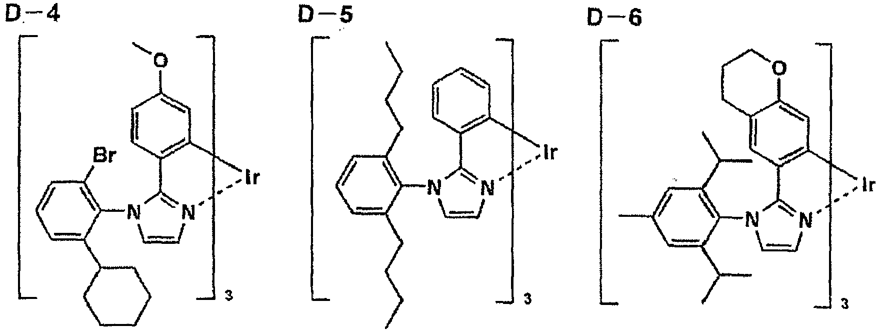

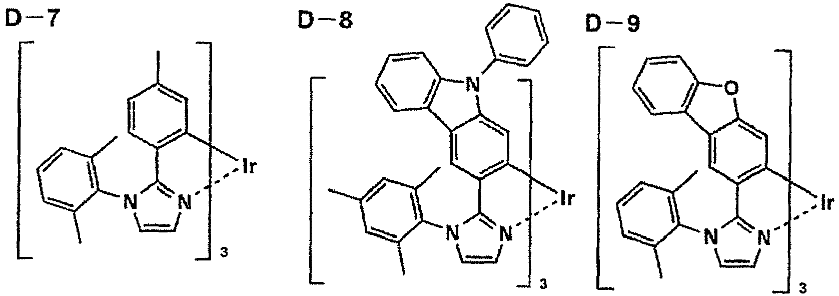

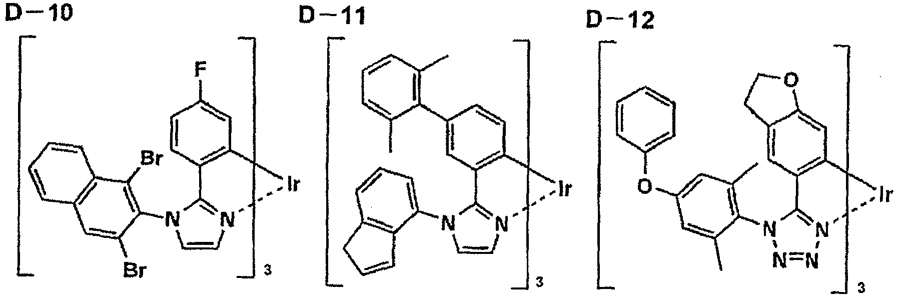

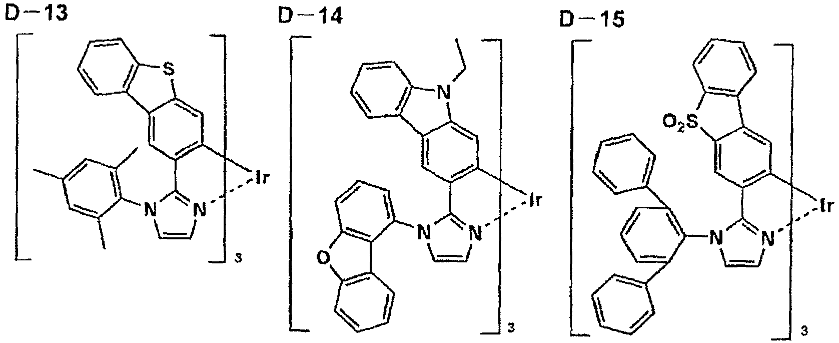

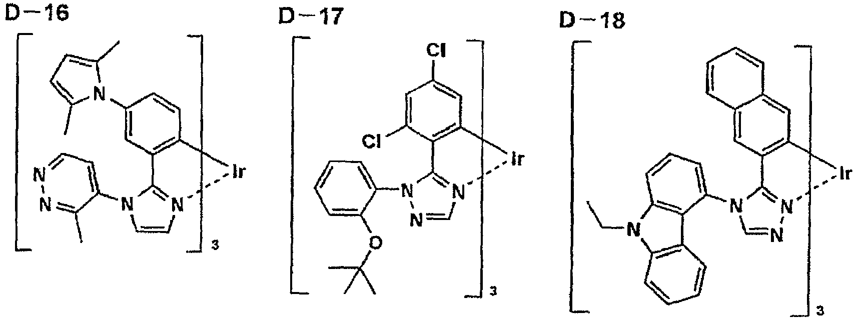

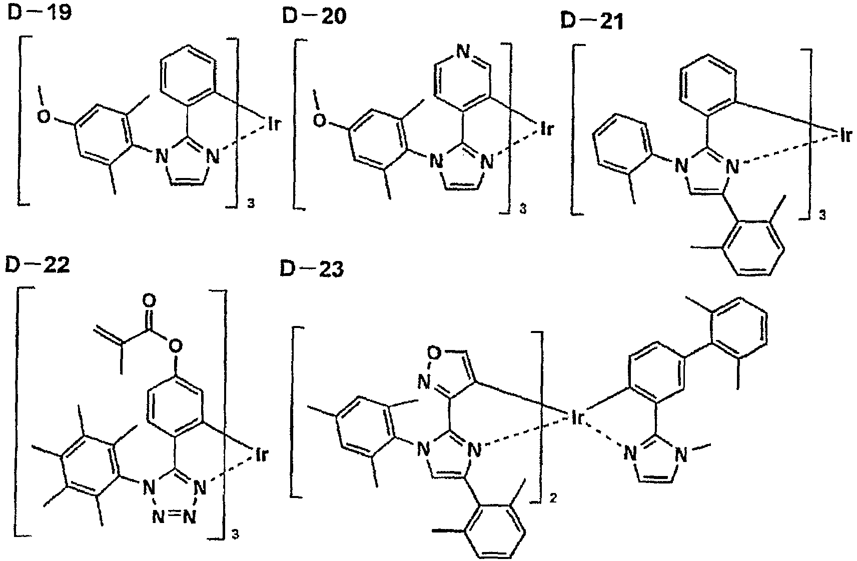

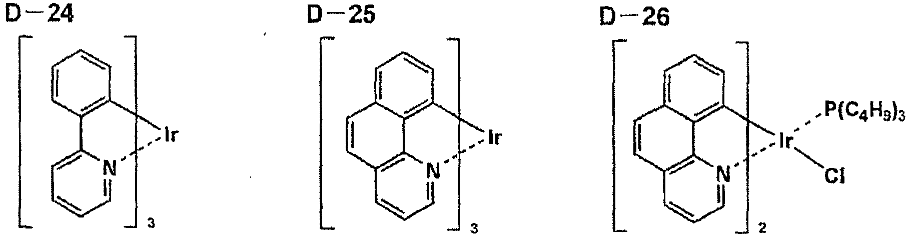

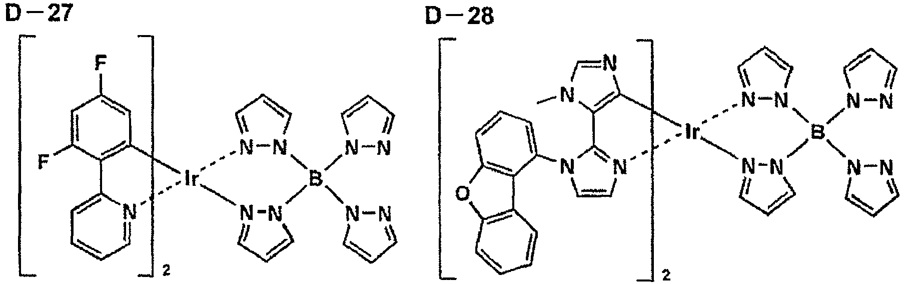

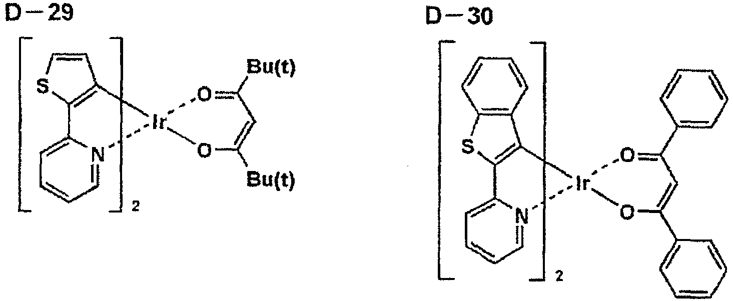

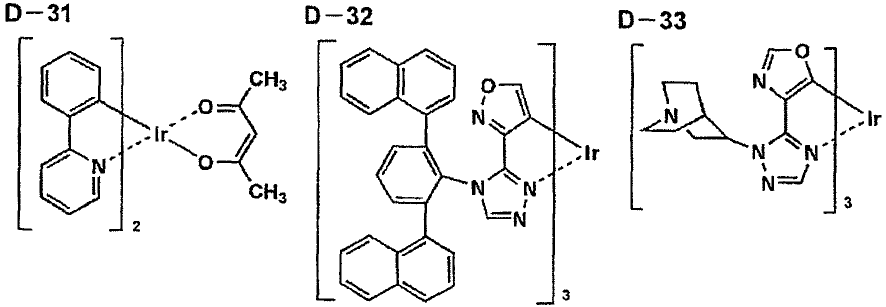

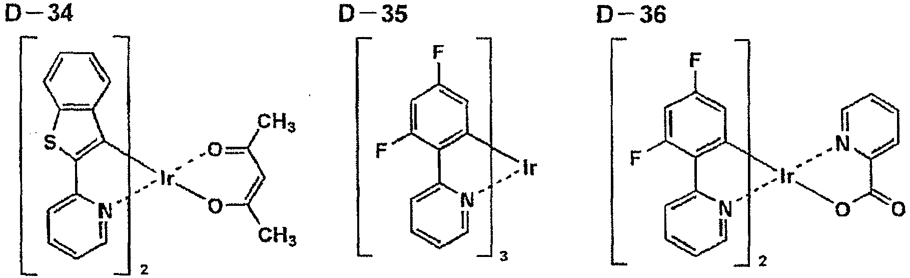

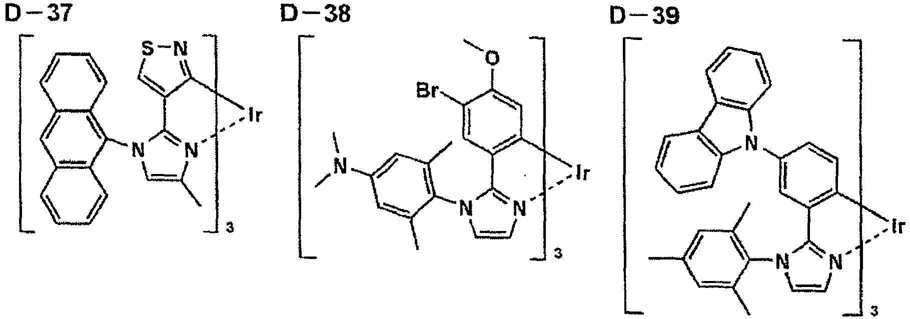

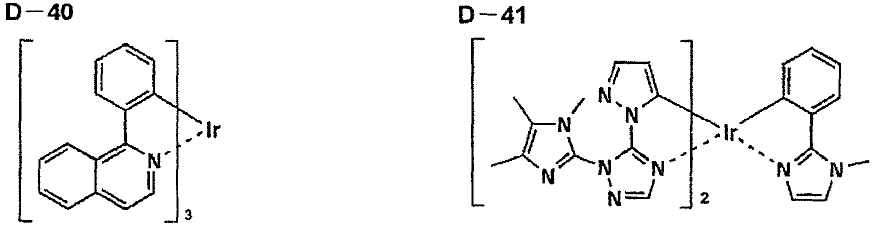

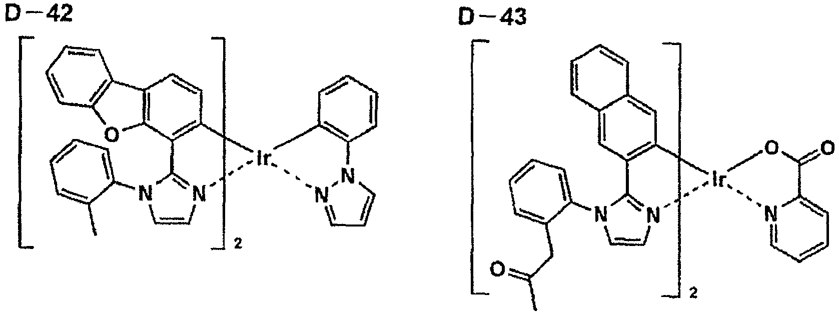

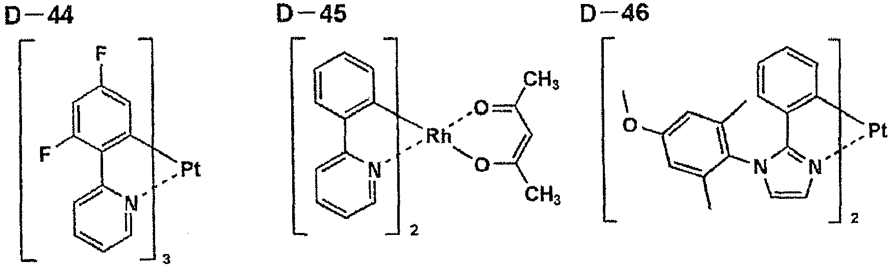

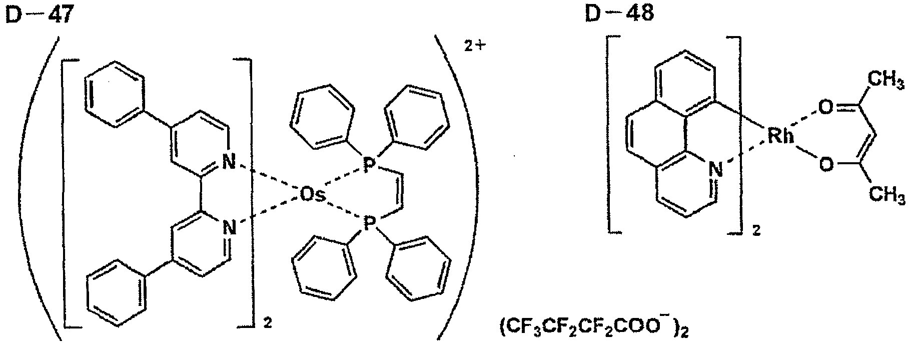

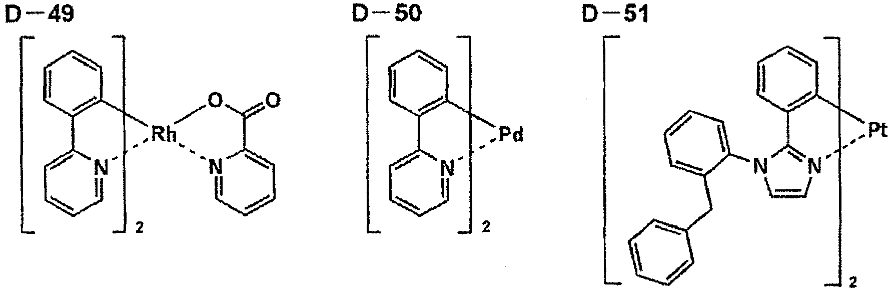

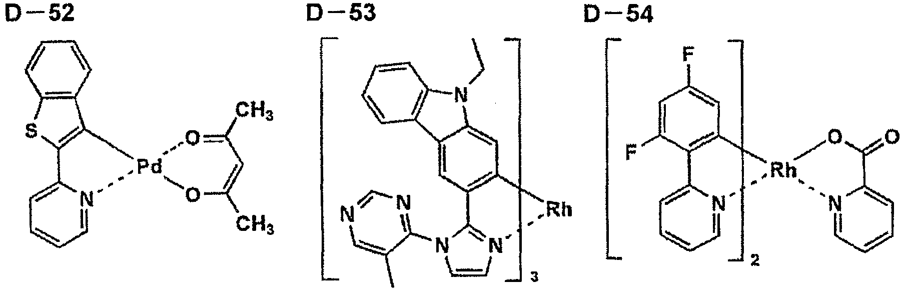

Especially, when a phosphorescent dopant is used in an organic EL element of the present invention, the triplet energy of the host is preferably larger than the triplet energy of the dopant. By this, it can be increase luminance and emission quantum efficiency to result in achieving high quality.

As a phosphorescent dopant according to the present invention, the compounds represented by the aforesaid Formula (1) are preferably used.

In Formula (1), examples of a bidentate ligand represented by P₁-L1-P₂ include: substituted or unsubstituted phenylpyridine, phenylpyrazole, phenylimidazole, phenyltriazole, phenyltetrazole, pyrazabol, acetylacetone and picolinic acid.

M₁ represents a transition metal element of Group 8 to Group 10 in the periodic table of the elements. Among them, M₁ is preferably indium or platinum. In particular, iridium is preferable.

As a hydrocarbon ring group represented by Z, a non aromatic hydrocarbon ring group and an aromatic hydrocarbon ring group are cited. And as a non aromatic hydrocarbon ring group, a cyclopropyl group, a cyclopentyl group and a cyclohexyl group are cited. These groups may have no substituent or may have a substituent.

Examples of aromatic hydrocarbon ring group (it is called an aromatic hydrocarbon group, or an aryl group) include: a phenyl group, p-chlorophenyl group, a mesityl group, a tolyl group, a xylyl group, a naphthyl group, an anthryl group, a azulenyl group, a acenaphthenyl group, a fluorenyl group, a phenanthryl group, an indenyl group, a pyrenyl group and a biphenylyl group. These groups may have no substituent or may have a substituent.

In Formula (1), R₈₁ to R₈₆ each represent a hydrogen atom or a substituent. Examples of a substituent are the same substituents represented by R' and R" for X in a partial structure represented by Formula (a).

These substituents may further be substituted with the aforesaid substituents. Further, these substituents may join to form a ring.

Next, an injection layer, a blocking layer and an electron transporting layer which are used in an organic EL element of the preset invention will be described.

### <<Injection Layer: Electron injection layer, Hole injection layer>>

An injection layer is appropriately provided according to the necessity. It may be arranged between an anode and a light emitting layer or a hole transporting layer, and between a cathode and a light emitting layer or an electron transporting layer.

An injection layer is a layer which is arranged between an electrode and an organic layer to decrease an operating voltage and to improve an emission luminance, which is detailed in volume 2, chapter 2 (pp. 123 -166) of "Organic EL Elements and Industrialization Front thereof (Nov. 30th 1998, published by N. T. S Corp.)", and includes a hole injection layer (an anode buffer layer) and an electron injection layer (a cathode buffer layer).

An anode buffer layer (a hole injection layer) is also detailed in such as JP-A Nos. 9-45479,9-260062 and 8-288069, and specific examples include such as a phthalocyanine buffer layer comprising such as copper phthalocyanine, an oxide buffer layer comprising such as vanadium oxide, an amorphous carbon buffer layer, and a polymer buffer layer employing conductive polymer such as polyaniline (or called as emeraldine) or polythiophene.

In addition, the following compounds are also cited to be used in a hole injection layer: ferrocene compounds disclosed in JP-A No. 6-025658; star burst compounds disclosed in JP-A No. 10-233287; triaryl amine compounds disclosed in JP-A Nos. 2000-068058 and 2004-6321; sulfur containing compounds disclosed in JP-A No. 2002-117979; and hexaazatriphenylene compounds disclosed in US 2002/185242, US 2006/251922, and JP-A No. 2006-49393.

A cathode buffer layer (an electron injection layer) is also detailed in such as JP-A Nos. 6-325871, 9-17574 and 10-74586, and specific examples include a metal buffer layer represented by strontium and aluminum, an alkali metal compound buffer layer represented by lithium fluoride, an alkali earth metal compound buffer layer represented by magnesium fluoride, and an oxide buffer layer represented by aluminum oxide.

The above-described buffer layer (injection layer) is preferably a very thin layer, and the layer thickness is preferably in a range of 0.1 nm to 5 µm although it depends on a raw material.

### <<Blocking Layer: Hole blocking layer, Electron blocking layer>>

A blocking layer is appropriately provided in addition to the basic constitution layers composed of organic thin layers as described above.

Examples are described in such as JP-A Nos. 11-204258 and 11-204359 and p.273 of "Organic EL Elements and Industrialization Front Thereof (Nov. 30 (1998), published by N. T. S Corp.)" is applicable to a hole blocking (hole block) layer according to the present invention.

A hole blocking layer, in a broad meaning, is provided with a function of electron transporting layer, being comprised of a material having a function of transporting an electron but a very small ability of transporting a hole, and can improve the recombination probability of an electron and a hole by inhibiting a hole while transporting an electron. Further, a constitution of an electron transporting layer described below can be appropriately utilized as a hole blocking layer according to the present invention.

When a hole blocking layer of an organic EL element of the present invention is arranged adjacent to a light emitting layer, it is preferable to be formed with a wet process. Moreover, it is especially preferable to be formed with method such as an ink-jet method, a printing method, and a slot die coater method.

On the other hand, the electron blocking layer, as described herein, has a function of the hole transporting layer in a broad sense, and is composed of materials having markedly small capability of electron transporting, while having capability of transporting holes and enables to enhance the recombination probability of electrons and holes by inhibiting electrons, while transporting electrons. Further, it is possible to employ the constitution of the hole transporting layer, described below, as an electron blocking layer when needed.

The thickness of the hole blocking layer and the electron transporting layer according to the present invention is preferably in the range of 3 nm to 100 nm, but more preferably it is in the range of 5 nm to 30 nm.

### <<Hole transporting layer>>

A hole transporting layer contains a material having a function of transporting a hole, and in a broad meaning, a hole injection layer and an electron blocking layer are also included in a hole transporting layer. A single layer of or plural layers of a hole transporting layer may be provided.

A hole transport material is a compound having any one of a property to inject or transport a hole or a barrier property to an electron, and it may be either an organic substance or an inorganic substance.

For example, listed are a triazole derivative, an oxadiazole derivative, an imidazole derivative, a polyarylalkane derivative, a pyrazolone derivative, a phenylenediamine derivative, an arylamine derivative, an amino substituted chalcone derivative, an oxazole derivatives, a styrylanthracene derivative, a fluorenone derivative, a hydrazone derivative, a stilbene derivative, a silazane derivative, an aniline type copolymer, or conductive polymer oligomer and specifically preferably such as thiophene oligomer.

As a hole transporting material, those described above can be utilized, however, it is preferable to utilized a porphyrin compound, an aromatic tertiary amine compound and a styrylamine compound, and specifically preferably an aromatic tertiary amine compound.

Typical examples of an aromatic tertiary amine compound and a styrylamine compound include: N, N, N', N'-tetraphenyl-4,4'-diaminophenyl; N, N'-diphenyl-N, N'-bis(3-methylphenyl)-(1, 1'-biphenyl)-4,4'-diamine (TDP); 2, 2-bis(4-di-p-tolylaminophenyl)propane; 1,1-bis(4-di-p-tolylaminophenyl)cyclohexane; N, N, N', N'-tetra-p-tolyl 4,4'-diaminobiphenyl; 1,1-bis(4-di-p-tolylaminophenyl)-4-phenylcyclohexane; bis(4-dimethylamino-2-metyl)phenylmethane; bis(4-di-p-tolylaminophenyl)phenylmethane; N,N'-diphenyl N,N'-di(4-methoxyphenyl)-4,4'-diaminobiphenyl; N, N, N',N'-tetraphenyl-4,4'-diaminophenylether; 4,4'-bis(diphenylamino)quadriphenyl; N, N, N-tri(p-tolyl)amine; 4-(di-p-toly1amino)-4'-[4-(di-p-triamino)stylyl]stilbene; 4-N, N-diphenylamino-(2-diphenylvinyl)benzene; 3-methoxy-4'-N, N-diphenylaminostilbene; and N-phenylcarbazole, in addition to those having two condensed aromatic rings in a molecule described in USP No. 5,061,569, such as 4, 4'-bis[N-(1-naphthyl)-N-phenylamino]biphenyl (NDP), and 4, 4', 4"-tris[N-(3-methylphenyl)-N-phenylamino]triphenylamine (MDTDATA), in which three of triphenylamine units are bonded in a star burst form, described in JP-A No. 4-308688.

Polymer materials, in which these materials are introduced in a polymer chain or constitute the main chain of polymer, can be also utilized. Further, an inorganic compound such as a p type-Si and a p type-SiC can be utilized as a hole injection material and a hole transporting material

Further, it is possible to employ so-called p type hole transporting materials, as described in Japanese Patent Publication Open to Public Inspection (referred to as JP-A) No. 11-251067, and J. Huang et al. reference (Applied Physics Letters 80(2002), p. 139). In the present invention, since high efficiency light emitting elements are prepared, it is preferable to employ these materials.

The hole transporting layer can be prepared by forming a thin layer made of the above-described hole transporting material according to a method well known in the art such as a vacuum evaporation method, a spin coating method, a cast method, a printing method including an ink-jet method, a spray method, and a slot die coater method. When it is arranged adjacent to a light emitting layer, it is preferable to be formed with a wet process. Moreover, it is especially preferable to be formed with methods such as an ink-jet method, a printing method, and a slot die coater method.

The layer thickness of a hole transporting layer is not specifically limited, however, it is generally 5 nm to 5 µm,and preferably it is 5 nm to 200 nm. This positive transporting layer may have a single layer structure comprised of two or more types of the above-described materials.

Further, it is possible to employ a hole transporting layer of a higher p property which is doped with impurities. As its example, listed are those described in each of JP-A Nos. 4-297076, 2000-196140, 2001-102175, as well as in J. Appl. Phys., 95, 5773 (2004).

In the present invention, it is preferable to use a hole transporting layer of a higher p property since it enables to prepare an element of low electric power consumption.

### <<Electron transporting layer>>

An electron transporting layer is composed of a material having a function to transfer an electron, and an electron injection layer and a hole blocking layer are included in an electron transporting layer in a broad meaning. A single layer or plural layers of an electron transporting layer may be provided.

Electron transport materials employed in an adjacent layer to the cathode side, they are only required to have a function of transporting electrons ejected from the cathode to the light emitting layer. As such materials, any of the conventional compounds may be selected and employed. Examples of them include: a nitro-substituted fluorene derivative, a diphenylquinone derivative, a thiopyradineoxide derivative, carbodiimide, a fluorenylidenemethane derivative, anthraquinonedimethane, an anthrone derivative, and an oxadiazole derivative.

Further, as examples of an oxadiazole derivative described above, the following compounds can be used as an electron transport material: a thiadiazole derivative in which an oxygen atom in the oxadiazole ring is replaced with a sulfur atom; and a quinoxaline derivative which contains a quinoxaline ring known as an electron withdrawing group. Moreover, polymer materials, in which these materials are introduced in a polymer chain or these materials form the main chain of polymer, can be also utilized.

Further, a metal complex of a 8-quinolinol derivative such as tris(8-quinolinol)alumirnun (Alq₃), tris(5,7-dichloro-8-quinolinol)aluminum, tris(5,7-dbromo-8-quinolinol)aluminum, tris(2-methyl-8-quinolinol)aluminum, tris(5-methyl-8-quinolinol)aluminum and bis(8-quinolinol)zinc (Znq); and metal complexes in which a central metal of the aforesaid metal complexes is substituted by In, Mg, Cu, Ca, Sn, Ga or Pb, can be also utilized as an electron transport material.

Further, metal-free or metal phthalocyanine, or a phthalocyanine derivative whose terminal is substituted by an alkyl group and a sulfonic acid group, can be preferably utilized as an electron transport material. In addition, a distyrylpyradine derivative which was cited as a light emitting material can be used as an electron transport material. Moreover, similarly to the case of a hole injection layer and to the case of a hole transfer layer, an inorganic semiconductor such as an n-type-Si and an n-type-SiC can be also utilized as an electron transport material.

The electron transporting layer can be prepared by forming a thin layer made of the above-described electron transport material according to a method well known in the art such as a vacuum evaporation method, a spin coating method, a cast method, a printing method including an ink-jet method, a spray method, and a slot die coater method. When it is arranged adjacent to a light emitting layer, it is preferable to be formed with a wet process. Moreover, it is especially preferable to be formed with methods such as an ink-jet method, a printing method, and a slot die coater method.

The layer thickness of an electron transporting layer is not specifically limited, however, it is generally 5 nm to 5 µm, and preferably it is 5 nm to 200 nm. This electron transporting layer may be a single layer containing two or more types of the above-described materials.

### <<Anode>>

As an anode according to an organic EL element of the present invention, those comprising metal, alloy, a conductive compound, which is provided with a large work function (not less than 4 eV), and a mixture thereof as an electrode substance are preferably utilized. Specific examples of such an electrode substance include a conductive transparent material such as metal like Au, CuI, indium tin oxide (ITO), SnO₂ and ZnO. Further, a material such as In₂O₃-ZnO, which can prepare an amorphous and transparent electrode, may be also utilized.

As for an anode, these electrode substances may be made into a thin layer by a method such as evaporation or spattering and a pattern of a desired form may be formed by means of photolithography, or in the case of requirement of pattern precision is not so severe (not less than 100 µm), a pattern may be formed through a mask of a desired form at the time of evaporation or spattering of the above-described substance.

Alternatively, when coatable materials such as organic electrically conductive compounds are employed, it is possible to employ a wet system filming method such as a printing system or a coating system. When emission is taken out of this anode, the transmittance is preferably set to not less than 10% and the sheet resistance as an anode is preferably not more than a few hundreds Ω/□. Further, although the layer thickness depends on a material, it is generally selected in a range of 10 nm to 1,000 nm and preferably of 10 nm to 200 nm.

### <<Cathode>>

On the other hand, as a cathode according to the present invention, metal, alloy, a conductive compound and a mixture thereof, which have a small work function (not more than 4 eV), are utilized as an electrode substance. Specific examples of such an electrode substance includes such as sodium, sodium-potassium alloy, magnesium, lithium, a magnesium/copper mixture, a magnesium/silver mixture, a magnesium/aluminum mixture, a magnesium/indium mixture, an aluminum/aluminum oxide (Al₂O₃) mixture, indium, a lithium/aluminum mixture and rare earth metal.

Among them, with respect to an electron injection property and durability against such as oxidation, preferable are a mixture of electron injecting metal with the second metal which is stable metal having a work function larger than electron injecting metal, such as a magnesium/silver mixture, a magnesium/aluminum mixture, a magnesium/indium mixture, an aluminum/aluminum oxide (Al₂O₃) mixture and a lithium/aluminum mixture, and aluminum. A cathode can be prepared by forming a thin layer of these electrode substances with a method such as evaporation or sputtering.

Further, the sheet resistance as a cathode is preferably not more than a few hundreds Ω/□ and the layer thickness is generally selected in the range of 10 nm to 5 µm and preferably of 50 nm to 200 nm. In order to make transmit emitted light, either one of an anode or a cathode of an organic EL element is preferably transparent or translucent to improve the emission luminance.

Further, after forming, on the cathode, the above metals at a film thickness of 1 nm to 20 nm, it is possible to prepare a transparent or translucent cathode in such a manner that electrically conductive transparent materials are prepared thereon. By applying the above, it is possible to produce an element in which both anode and cathode are transparent.

### <<Substrate>>

An anode, a cathode, and constituting layers of the present invention are formed on a substrate. A substrate according to an organic EL element of the present invention is not specifically limited with respect to types of such as glass and plastics. They me be transparent or opaque.

A transparent substrate is preferable when the emitting light is taken from the side of substrate. Transparent substrates preferably utilized includes such as glass, quartz and transparent resin film. A specifically preferable substrate is a resin film capable of providing an organic EL element with a flexible property.

Examples of a resin film includes: polyesters such as polyethylene terephthalate (PET) and polyethylene naphthalate (PEN); polyethylene, polypropyrene; cellulose esters or their derivatives such as cellophane, cellulose diacetate, cellulose triacetate, cellulose acetate butylate, cellulose acetate propionate (CAP), cellulose acetate phthalate (TAC) and cellulose nitrate; polyvinylidene chloride, polyvinyl alcohol, polyethylene vinyl alcohol, syndiotactic polystyrene, polycarbonate, norbornene resin, polymethylpentene, polyether ketone, polyimide, polyether sulfone (PES), polyphenylene sulfide, polysulfones, polyetherimide, polyether ketone imide, polyamide, fluororesin, Nylon, polymethylmethacrylate, acrylic resin, polyacrylate; and cycloolefine resins such as ARTON (produced by JSR Co. Ltd.) and APEL (produce by Mitsui Chemicals, Inc.)

On the surface of a resin film, it may be formed a film incorporating an inorganic or an organic compound or a hybrid film incorporating both compounds. Ii is preferable to be a barrier film having a water vapor permeability of at most 0.01 g/(m²·24h) (25 ± 0.5 °C, and relative humidity (90 ± 2)% RH) determined based on JIS K 7129-1992. Further, it is preferable to be a high barrier film having an oxygen permeability of at most 1 × 10⁻³ cm³/(m²·24h·MPa) determined based on JIS K 7126-1987, and having a water vapor permeability of at most 10⁻⁵ g/(m²·24h).

As materials forming a barrier film, employed may be those which retard penetration of moisture and oxygen, which deteriorate the element. For example, it is possible to employ silicon oxide, silicon dioxide, and silicon nitride. Further, in order to improve the brittleness of the aforesaid film, it is more preferable to achieve a laminated layer structure of inorganic layers and organic layers. The laminating order of the inorganic layer and the organic layer is not particularly limited, but it is preferable that both are alternatively laminated a plurality of times.

Barrier film forming methods are not particularly limited, and examples of employable methods include a vacuum deposition method, a sputtering method, a reactive sputtering method, a molecular beam epitaxy method, a cluster ion beam method, an ion plating method, a plasma polymerization method, a plasma CVD method, a laser CVD method, a thermal CVD method, and a coating method. Of these, specifically preferred is a method employing an atmospheric pressure plasma polymerization method, described in JP-A No. 2004-68143.

Examples of opaque support substrates include metal plates such aluminum or stainless steel, films, opaque resin substrates, and ceramic substrates.

### <<Sealing>>

As sealing means employed in the present invention, listed are, for example, a method in which sealing members, electrodes, and a supporting substrate are subjected to adhesion via adhesives.

The sealing members may be arranged to cover the display region of an organic EL element, and may be an engraved plate or a flat plate. Neither transparency nor electrical insulation is limited.

Specifically listed are glass plates, polymer plate- films, metal plates, and films. Specifically, it is possible to list, as glass plates, soda-lime glass, barium-strontium containing glass, lead glass, aluminosilicate glass, borosilicate glass, barium borosilicate glass, and quartz. Further, listed as polymer plates may be polycarbonate, acryl, polyethylene terephthalate, polyether sulfide, and polysulfone. As a metal plate, listed are those composed of at least one metal selected from the group consisting of stainless steel, iron, copper, aluminum magnesium, nickel, zinc, chromium, titanium, molybdenum, silicon, germanium, and tantalum, or alloys thereof

In the present invention, since it is possible to convert the element to a thin film, it is possible to preferably employ a metal film. Further, the oxygen permeability of the polymer film is preferably at most 1 × 10⁻³ cm³/(m²·24h·MPa), determined by the method based on JIS K 7126-1987, while its water vapor permeability (at 25 ± 0.5 °C and relative humidity (90 ± 2)%) is at most 1 × 10⁻³ g/(m²-24h), determined by the method based on JIS K 7129-1992.

Conversion of the sealing member into concave is carried out employing a sand blast process or a chemical etching process.

In practice, as adhesives, listed may be photo-curing and heat-curing types having a reactive vinyl group of acrylic acid based oligomers and methacrylic acid, as well as moisture curing types such as 2-cyanoacrylates. Further listed may be thermal and chemical curing types (mixtures of two liquids) such as epoxy based ones. Still further listed may be hot-melt type polyamides, polyesters, and polyolefins. Yet further listed may be cationically curable type ultraviolet radiation curable type epoxy resin adhesives.

In addition, since an organic EL element is occasionally deteriorated via a thermal process, those are preferred which enable adhesion and curing between room temperature and 80 °C. Further, desiccating agents may be dispersed into the aforesaid adhesives. Adhesives may be applied onto sealing portions via a commercial dispenser or printed on the same in the same manner as screen printing.

Further, it is appropriate that on the outside of the aforesaid electrode which interposes the organic layer and faces the support substrate, the aforesaid electrode and organic layer are covered, and in the form of contact with the support substrate, inorganic and organic material layers are formed as a sealing film. In this case, as materials forming the aforesaid film may be those which exhibit functions to retard penetration of those such as moisture or oxygen which results in deterioration. For example, it is possible to employ silicon oxide, silicon dioxide, and silicon nitride. Still further, in order to improve brittleness of the aforesaid film, it is preferable that a laminated layer structure is formed, which is composed of these inorganic layers and layers composed of organic materials.

Methods to form these films are not particularly limited. It is possible to employ, for example, a vacuum deposition method, a sputtering method, a reactive sputtering method, a molecular beam epitaxy method, a cluster ion beam method, an ion plating method, a plasma polymerization method, an atmospheric pressure plasma polymerization method, a plasma CVD method, a thermal CVD method, and a coating method.

In a gas phase and a liquid phase, it is preferable to inject inert gases such as nitrogen or argon, and inactive liquids such as fluorinated hydrocarbon or silicone oil into the space between the sealing member and the surface region of the organic EL element. Further, it is possible to form vacuum. Still further, it is possible to enclose hygroscopic compounds in the interior.

Examples of hygroscopic compounds include metal oxides (for example, sodium oxide, potassium oxide, calcium oxide, barium oxide, magnesium oxide, and aluminum oxide); sulfates (for example, sodium sulfate, calcium sulfate, magnesium sulfate, and cobalt sulfate); metal halides (for example, calcium chloride, magnesium chloride, cesium fluoride, tantalum fluoride, cerium bromide, magnesium bromide, barium iodide, and magnesium iodide); perchlorates (for example, barium perchlorate and magnesium perchlorate). In sulfates, metal halides, and perchlorates, suitably employed are anhydrides.

### <<Protective film and Protective plate>>

The aforesaid sealing film on the side which nips the organic layer and faces the support substrate or on the outside of the aforesaid sealing film, a protective or a protective plate may be arranged to enhance the mechanical strength of the element. Specifically, when sealing is achieved via the aforesaid sealing film, the resulting mechanical strength is not always high enough, whereby it is preferable to arrange the protective film or the protective plate described above. Usable materials for these include glass plates, polymer plate-films, and metal plate-films which are similar to those employed for the aforesaid sealing. However, in terms of light weight and a decrease in thickness, it is preferable to employ polymer films.

### <<Light emission>>

It is generally known that an organic EL element emits light in the interior of the layer exhibiting the refractive index (being about 1.7 to about 2.1) which is greater than that of air, whereby only about 15 to about 20% of light generated in the light emitting layer is extracted. This is due to the fact that light incident to an interface (being an interface of a transparent substrate to air) at an angle of θ which is at least critical angle is not extracted to the exterior of the element due to the resulting total reflection, or light is totally reflected between the transparent electrode or the light emitting layer and the transparent substrate, and light is guided via the transparent electrode or the light emitting layer, whereby light escapes in the direction of the element side surface.

Means to enhance the efficiency of the aforesaid emission include, for example, a method in which roughness is formed on the surface of a transparent substrate, whereby total reflection is minimized at the interface of the transparent substrate to air (U.S. Patent No. 4,774,435), a method in which efficiency is enhanced in such a manner that a substrate results in light collection (JP-A No. 63-314795), a method in which a reflection surface is formed on the side of the element (JP-A No.1-220394), a method in which a flat layer of a middle refractive index is introduced between the substrate and the light emitting body and an antireflection film is formed (JP-A No. 62-172691), a method in which a flat layer of a refractive index which is equal to or less than the substrate is introduced between the substrate and the light emitting body (JP-A No. 2001-202827), and a method in which a diffraction grating is formed between the substrate and any of the layers such as the transparent electrode layer or the light emitting layer (including between the substrate and the outside) (JP-A No. 11-283751).

In the present invention, it is possible to employ these methods while combined with the organic EL element of the present invention. Of these, it is possible to appropriately employ the method in which a flat layer of a refractive index which is equal to or less than the substrate is introduced between the substrate and the light emitting body and the method in which a diffraction grating is formed between the substrate and any of the layers such as the transparent electrode layer or the light emitting layer (including between the substrate and the outside).

By combining these means, the present invention enables the production of elements which exhibit higher luminance or excel in durability.

When a low refractive index medium of a thickness, which is greater than the wavelength of light, is formed between the transparent electrode and the transparent substrate, the extraction efficiency of light emitted from the transparent electrode to the exterior increases as the refractive index of the medium decreases.

As materials of the low refractive index layer, listed are, for example, aerogel, porous silica, magnesium fluoride, and fluorine based polymers. Since the refractive index of the transparent substrate is commonly about 1.5 to about 1.7, the refractive index of the low refractive index layer is preferably at most approximately 1.5, but is more preferably at most 1.35.

Further, thickness of the low refractive index medium is preferably at least two times the wavelength in the medium. The reason is that when the thickness of the low refractive index medium reaches nearly the wavelength of light so that electromagnetic waves oozed via evernescent enter into the substrate, effects of the low refractive index layer are lowered.

The method in which the interface which results in total reflection or a diffraction grating is introduced in any of the media is **characterized in that** light emission efficiency is significantly enhanced. This method works as follows. By utilizing properties of the diffraction grating capable of changing the light direction to the specific direction different from diffraction via so-called Bragg diffraction such as primary diffraction or secondary diffraction of the diffraction grating, of light emitted from the light emitting layer, light, which is not emitted to the exterior due to total reflection between layers, is diffracted via introduction of a diffraction grating between any layers or in a medium (in the transparent substrate and the transparent electrode) so that light is extracted to the exterior.

It is preferable that the introduced diffraction grating exhibits a two-dimensional periodic refractive index. The reason is as follows. Since light emitted in the light emitting layer is randomly generated to all directions, in a common one-dimensional diffraction grating exhibiting a periodic refractive index distribution only in a certain direction, light which travels to the specific direction is only,diffi-acted, whereby light emission efficiency is not sufficiently enhanced. However, by changing the refractive index distribution to a two-dimensional one, light, which travels to all directions, is diffracted, whereby the light light emission efficiency is enhanced.

As noted above, a position to introduce a diffraction grating may be between any layers or in a medium (in a transparent substrate or a transparent electrode). However, a position near the organic light emitting layer, where light is generated, is desirous. In this case, the cycle of the diffraction grating is preferably about 1/2 to about 3 times the wavelength of light in the medium.

The preferable arrangement of the diffraction grating is such that the arrangement is two-dimensionally repeated in the form of a square lattice, a triangular lattice, or a honeycomb lattice.

### «Light collection sheet»

Via a process to arrange a structure such as a micro-lens array shape on the light emission side of the organic EL element of the present invention or via combination with a so-called light collection sheet, light is collected in the specific direction such as the front direction with respect to the light emitting element surface, whereby it is possible to enhance luminance in the specific direction.

In an example of the micro-lens array, square pyramids to realize a side length of 30 µm and an apex angle of 90 degrees are two-dimensionally arranged on the light emission side of the substrate. The side length is preferably 10 µm to 100 µm. When it is less than the lower limit, coloration results due to generation of diffraction effects, while when it exceeds the upper limit, the thickness increases undesirably.

It is possible to employ, as a light collection sheet, for example, one which is put into practical use in me LED backlight of liquid crystal display devices. It is possible to employ, as such a sheet, for example, the luminance enhancing film (BEF), produced by Sumitomo 3M Limited. As shapes of a prism sheet employed may be, for example, Δ shaped stripes of an apex angle of 90 degrees and a pitch of 50 µm formed on a base material, a shape in which the apex angle is rounded, a shape in which the pitch is randomly changed, and other shapes.

Further, in order to control the light radiation angle from the light emitting element, simultaneously employed may be a light diffusion plate-film. For example, it is possible to employ the diffusion film (LIGHT-UP), produced by Kimoto Co., Ltd.

### <<Preparation method of Organic EL element>>

As one example of the preparation method of the organic EL element of the present invention, the preparation method of the organic EL element composed of anode/hole injection layer/hole transporting layer/light emitting layer/electron transporting layer/electron injection layer/cathode will be described.

Initially, a thin film composed of desired electrode substances, for example, anode substances is formed on an appropriate base material to reach a thickness of at most 1 µm but preferably 10 nm to 200 nm, employing a method such as vapor deposition or sputtering, whereby an anode is prepared.

After production, it may perform a cleaning surface modification process and an electrostatic charge elimination process.

As a cleaning surface modification process, it can be used, for example, a low pressure mercury lamp, an excimer lamp, and a plasma cleaning apparatus. Surface modification of removing organic contamination objects and improvement in wettability is performed by this cleaning surface modification process.

As an electrostatic charge elimination process, it can be classified roughly into a light exposure type and a corona discharge type. A light exposure type will generate air ions with a weak X-ray, and a corona discharge type will generate it with corona discharge. These air ions will be attracted to a charged body and will, compensate an opposite polar electric charge to result in neutralizing static electricity.

The neutralizing apparatus by corona discharge and the neutralizing apparatus by soft X-rays are available. By this electrostatic charge elimination process, it is possible to eliminate static electricity on the substrate, thus it can prevent adhesion of foreign matters and dielectric breakdown. As a result, improvement in the yield of an element can be achieved.

Subsequently, there are formed on this: a hole injection layer, a hole transporting layer, a light emitting layer, an electron transporting layer, an electron injection layer, and a hole blocking layer, which are materials composing an organic EL element.

Methods to form each of these layers include, as described above, a vapor deposition method and a wet process (a spin coating method, a casting method, an ink-jet method, and a spray method, a printing method and a slot die coater method). In the present invention, a part or all of the organic layers are preferably prepared by film formation via the wet process such as the spin coating method, the ink-jet method, the spray method, the printing method or the slot die coater method in view of easy formation of a homogeneous film and rare formation of pin holes.

Moreover, it is especially preferable to form the light emitting layer and the adjacent organic layer to the light emitting layer with a coating method such as an ink-jet method, a printing method, or a slot die coater method.

As liquid media which are employed to dissolve or disperse organic metal complexes according to the present invention, employed may be, for example, ketones such as methyl ethyl ketone or cyclohexanone, fatty acid esters such as ethyl acetate, halogenated hydrocarbons such as dichlorobenzene, aromatic hydrocarbons such as toluene, xylene, mesitylene, and cyclohexylbenzene, aliphatic hydrocarbons such as cyclohexane, decaline, and dodecane, and organic solvents such as DMF or DMSO.

Further, with regard to dispersion methods, it is possible to achieve dispersion employing dispersion methods such as ultrasonic waves, high shearing force dispersion or media dispersion.

After coating, it may remove solvents with a drying treatment process. A baking furnace can be used during a drying treatment process, and in a baking furnace, it is possible to use a plurality of zones in which are changed temperature conditions and blowing velocity according to the materials in the organic compound layers.

It may perform heating treatment after removal of solvents. There is no particular limitation for the heating treatment as long as a heat transfer is carried out from a back side. It is preferable to perform hating treatment at a temperature of glass transition point temperature ± 50 °C and not exceeding decomposition temperature.

It is possible to achieve film surface smoothness, removal of the remaining solvents, and hardening of coated films by performing heating treatment. Thereby, improvement in the element characteristic at the time of laminating films can be achieved.

After heating treatment, the substrate may be stored under a reduced gas pressure condition (10⁻⁶ Pa to 10⁻² Pa). It may apply heat. As a period of storing, it is preferable in the range of 1 hour to 200 hours. The longer the string period, the better the result. By this process, oxygen and the minute amount water content resulting from element deterioration are removed.

After forming these layers, a thin layer composed of cathode materials is formed on the above layers via a method such as vapor deposition or sputtering so that the film thickness reaches at most 1 µm, but is preferably in the range of 50 nm to 200 nm, whereby a cathode is arranged, and the desired organic EL element is prepared.

Further, by reversing the preparation order, it is possible to achieve preparation in order of a cathode, an electron injection layer, an electron transporting layer, a light emitting layer, a hole transporting layer, a hole injection layer, and an anode. When direct current voltage is applied to the multicolor display device prepared as above, the anode is employed as + polarity, while the cathode is employed as -polarity. When 2-40 V is applied, it is possible to observe light emission. Further, alternating current voltage may be applied. The wave form of applied alternating current voltage is not specified.

### <<Wet process>>

In the present invention, as an effective method to form a single coating layer of very thin and highly smooth which are required for the organic layer of the organic electroluminescence element, it is preferable to use a slot die coater coating method or an ink-jet coating method. In the following, the slot die coater coating method and the ink-jet coating method will be described in detail.

When using a slot die coater, a reduced pressure chamber is provided upstream of the coater, and a bead section is supported in a state of reduced pressure to further improve coating evenness. The reason is that the wetted location of the coating solution remains almost unmoved even though surface nature and wettability of a support are varied by depressurizing the lower portion of a bead, whereby a coating film having a uniform thickness can be obtained.

The slot die coater coating system is a system by which at least two coater dies are provided in combination, a coating solution supplied from a coating solution supply device expands in the width direction at a pocket portion of the coater die and flows at an even flow rate in the width direction from the slit section to directly coat the coating solution expanding in the width direction on the support in even coating film thickness. As previously described, it is of a further preferred embodiment that the reduced pressure chamber is placed upstream of the coater die.

Ink-jet heads are not specifically limited. For example, it may be a thermal type head fitted with a heater element, by which a coating solution is ejected from a nozzle via rapid volume change generated by film boiling of the coating solution caused by thermal energy from this heater element, and may be a shear mode type (piezo type) head equipped with a vibration plate, by which a coating solution is ejected via pressure change of an ink pressure chamber generated by this vibration plate, but the shear mode type (piezo type) head is preferable in view of stability of the coating solution. When a hole blocking layer is arranged adjacent to a light emitting layer, it is preferable to be formed with a wet process. Moreover, it is especially preferable to be formed with method such as an ink-jet method, a printing method, and a slot die coater method.

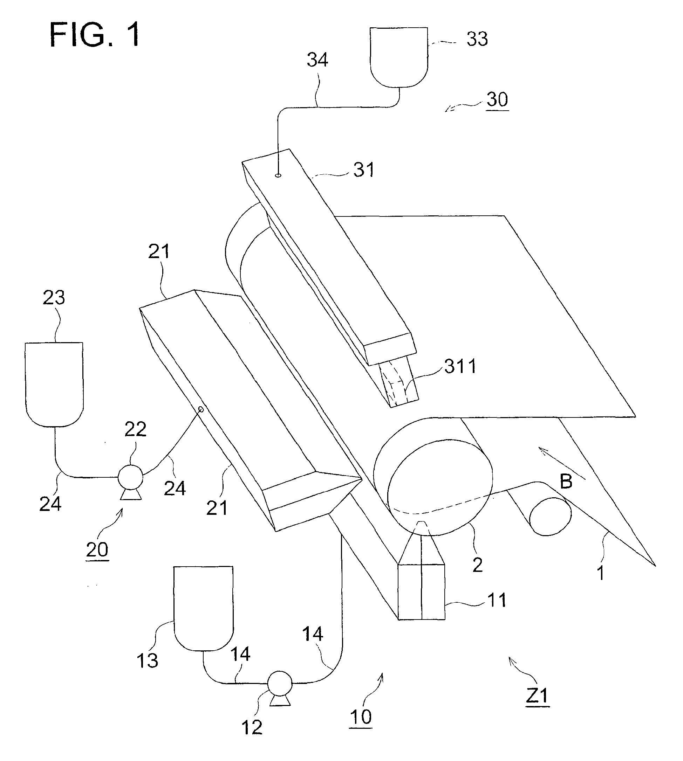

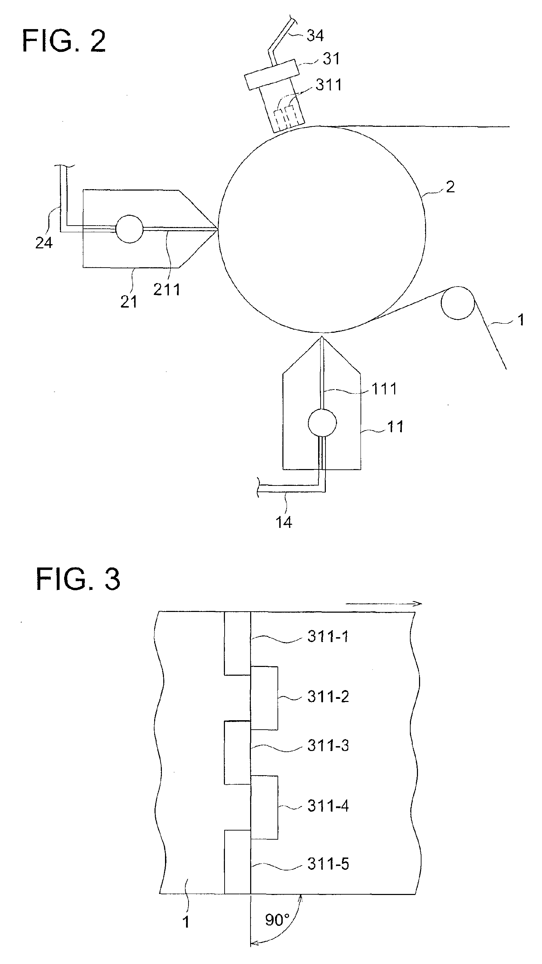

Fig. 1 is a schematic illustration diagram of a coating apparatus by using a coating method of the present invention. Fig. 1 shows an example in which three kinds of coating solutions are coated via layering to form a coating film composed of three layers, where two layers are coated with a slot die coater (hereinafter, referred to also as a coater), and one layer is coated via ink-jet Fig. 2 is an enlarged side view illustration obtained by viewing the coating apparatus shown in Fig. 1 from the arrow Z1 direction. Coaters 11 and 21 each show a cross-sectional view.

Long length support 1 wound in the form of a roll is conveyed by forwarding the support in the arrow B direction from a wind-off roll (not shown in the figure) with a drive unit (not shown in the figure).

Long length support 1 is conveyed so as to be supported by backup roll 2, and coating solutions are sequentially coated layer by layer employing coater 11 in coating unit 10 as a coating device, coater 21 in coating unit 20, and ink-jet head 311 provided in ink-jet unit 31 in coating unit 30 to form a multilayer coating film composed of three layers. The resulting multilayer coating film is rolled by a wind-up roll (not shown in the figure) after drying the multilayer coating film in the drying section (not shown in the figure).

Coating unit 10 is equipped with coater 11, liquid-feeding pump 12, coating solution tank 13, and coating solution supply tube 14. Liquid-feeding pump 12 supplies a coating solution stored in coating solution tank 13 into coater 11 via coating solution supply tube 14. Coater 11 equipped with slit 111 suited for the coating width in the support width direction, facing backup roll 2, and sandwiching support 1 with the backup roll is provided. Coater 11 conducts coating by ejecting a coating solution onto support 1 from slit 111. Coating unit 10 also has a function to evenly eject a coating solution in the width direction of support 1 from slit 111.

Coating unit 20 is equipped with coater 21, liquid-feeding pump 22, coating solution tank 23, and coating solution supply tube 24. Coating unit 20 has the same function as described in coating unit 10.

Coating unit 30 is equipped with ink-jet unit 31, ink-jet head 311 provided in ink-jet unit 31, coating solution tank 33, and coating solution supply tube 34. Ink-jet head 311 facing backup roll 2, and sandwiching support 1 with the backup roll is provided. A coating solution stored in coating solution tank 33 is supplied into ink-jet head 311 via coating solution supply tube 34, and is ejected to support 1 from a nozzle of ink-jet head 311. Through this, the coating solution is coated on support 1. The coating solution is ejected nearly in the direction of rotation center of backup roll 2 from a nozzle of ink-jet head 311.

The number of ink-jet heads 311 and the array of ink-jet heads 311 are arbitrarily arranged to be placed in ink₋jet unit 31. The number and array are appropriately selected depending on the utilized coating solution, the coating condition, the ejection width of ink-jet head 311, the coating width of support 1, and so forth.

Coating unit 30 supplies a coating solution into ink-jet head 311, and also has a function to keep coating solution pressure inside ink-jet head 311 constant.

Ink-jet heads 311 are not specifically limited. For example, it may be a thermal type head fitted with a heater element, by which a coating solution is ejected from a nozzle via rapid volume change generated by film boiling of the coating solution caused by thermal energy from this heater element, and may be a shear mode type (piezo type) head equipped with a vibration plate, by which a coating solution is ejected via pressure change of an ink pressure chamber generated by this vibration plate.

Fig. 3 is a schematic plan view of showing an example of an installation array of ink-jet heads 311.

Ink-jet heads 311-1 to 311-5 are placed as shown in Fig. 3. The surface possessing a nozzle ejection-opening of each of ink-jet heads 311-1 to 311-5 placed at regular intervals is parallel to the coating film surface of support 1, and the ink-jet heads are placed in such a way that 90° is an angle between the moving direction of support 1 and a line connecting central points of the nozzle ejection-openings place in the width direction perpendicular to the moving direction of support 1. They are also placed in staggered arrangement in such a way that ends of each of ink-jet heads 311-1 to 311-5 are piled on each other to eliminate an uncoated portion between adjacent ink-jet heads. A response to the width of support 1 becomes easier by employing plural ink-jet heads in such the way and placing the ink-jet heads as shown in Fig. 3, and the uncoated portion between the ink-jet heads is eliminated, whereby a stable coating film can be prepared.

Coater 11, coater 21 and ink-jet head 311 are placed at predetermined intervals along the circumference of backup roll 2.

The coating solution of the organic electroluminescence material used for an organic electroluminescence layer has a nature of drying easily. Therefore, in accordance with the progress degree of drying of the 1^{st} coating solution coated with coater 11, it is possible that mixing can be avoided when the 2^{nd} coating solution is coated with coater 21. Therefore, coating can be laminated, without producing mixing of a coating solution, if it is applied at a prescribed interval. Here, the time in which coating solutions are not mixed with each other can be measured and determined beforehand for every coating solution. The above-mentioned prescribed interval can be set from the time in which of no the measured coating solutions are not mixed mutually and the moving speed of support 1. Moreover, the diameter of the back up roll 2 can be set from the above-mentioned prescribed interval and the number of the coating units which are arranged.

Here, the diameter of the backup roll is preferably in the range of 0.5 m to 5 m. When it is less than 0.5 m, the number of the coating units arranged is too small, and the number of layers which are coated with one pass becomes too small to result in decreasing of production efficiency. Moreover, when the number of layers applied with one pass decreases, the number of rolling times will increase, and a coating film surface tends to receive damage easily at the time of the above-mentioned rolling up. When it exceeds 5 m, a manufacturing of the backup roll 2 will become difficult, and maintenance aptitude will also be reduced.

Moreover, although the coating thickness after drying of one coating layer is not limited in particular, it is preferable that usually it is about 5 nm to 5 µm and preferably it is 5 nm to 200 nm.

The coating speed by this mode is preferably from 1 m/minute to 10 m/minute, and more preferably from 1 m/minute to 5 m/minute from the viewpoints of stably coating thin films after drying and of preventing the development of a quality defect.

Since an upper layer is applied after fully drying the under layer, it becomes difficult to generate mixing between layers, and this will leads to preventing a quality defect.

In this embodiment, although it had a composition of a combination of two coaters and one ink-jet coater, it may also be a composition of using only coaters or all ink-jet coaters.

### <<Display device and Lighting device>>

The display device and the lighting device which are produced by applying the organic EL device concerning the present invention will be described. The organic EL device of the present invention may be used for a projection apparatus which projects a picture image, and also may be used for a display device (display) on which a still image or a motion picture is shown for direct visual observation. It may be used as a kind of a lamp for illumination or for an exposure light source.

### EXAMPLES

The present invention will now be described with reference to examples, however the present invention is not limited thereto.

The indication of "parts" or "%" is used in Examples. Unless specifically notice, this indicates "mass parts" or "mass%". In addition, the chemical structures of the compounds used in Examples are shown in the followings.

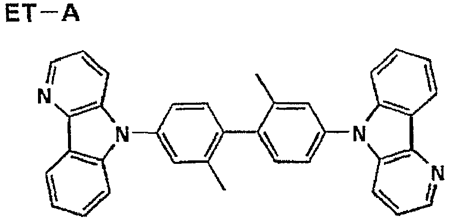

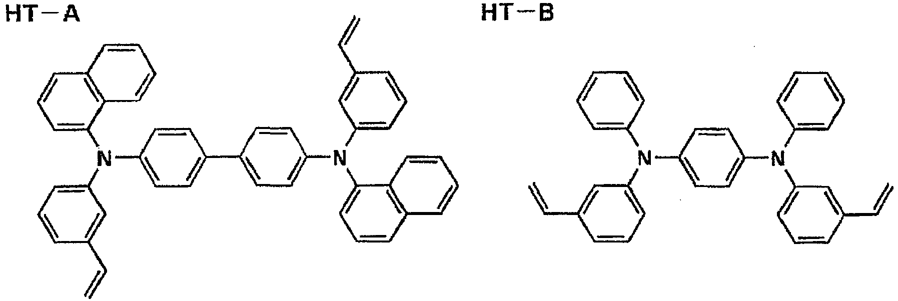

### Example 1

### <Preparation of Organic EL element 101>

An anode was prepared by making patterning to a glass substrate of 30 mm × 30 mm × 0.7 mm on which a 120 run film of ITO (indium tin oxide) had been formed. Thereafter, the above transparent support substrate provided with the ITO transparent electrode was subjected to ultrasonic washing with isopropyl alcohol, followed by drying with desiccated nitrogen gas, and was subjected to UV ozone washing for 5 minutes.

On this substrate thus prepared was applied a 70% solution of poly(3,4-ethylenedioxythiphene)-polystyrene sulfonate (PEDOT/PSS, Baytron P Al 4083 made by Bayer AG.) diluted with pure water by using a spin coating method at 3,000 rpm for 30 seconds to form a film and then it was dried at 200 °C for one hour. A hole injection layer having a thickness of 30 nm was prepared.

Subsequently, the substrate was transferred under a nitrogen atmosphere into a glove box which has a degree of cleanness of 100 measured based on the method of JIS B9920, a dew point of - 80 °C or less, and an oxygen content of 0.8 ppm.

In this glove box, the following coating solution for a hole transporting layer was prepared and it was coated under the condition of 1,500 rpm for 30 seconds with a spin coater.

This substrate was heated at 150 °C for 10 seconds, then while heating, it was irradiated with UV rays of 30 mW/cm² using a high pressure mercury lamp OHD-110M-ST (made by ORC Manufacturing Co., Ltd.) for 20 seconds.

Further, it was heated at 120 °C for 30 minutes to form a hole transporting layer. The coating was performed under the same condition on a substrate separately prepared, and the thickness of the film was measured to be 20 nm.

### (Coating solution for a hole transporting layer)

| | |
|---|---|
| Toluene | 100 g |
| HT-A | 0.45 g |
| HT-B | 0.05 g |

Then, the following coating solution for a light emitting layer was prepared and it was coated under the condition of increasing speed of 500 rpm to 5,000 rpm for 30 seconds with a spin coater. Further, it was heated at 150 °C for 30 minutes to produce a light emitting layer.

The prepared light emitting layer was subjected to X-ray diffraction measurement. There were observed no X-ray diffraction peaks and existence of crystal grains was not confirmed. The coating was performed under the same condition on a substrate separately prepared, and the thickness of the film was measured to be 40 nm.

### (Coating solution for a light emitting layer)

| | |
|---|---|
| Toluene | 100 g |
| H-27 | 1.0 g |
| D-1 | 0.11 g |

Then, the following coating solution for an electron transporting layer was prepared and it was coated under the condition of 1,500 rpm for 30 seconds with a spin coater. Further, it was heated at 120 °C for 30 minutes to produce an electron transporting layer. The coating was performed under the same condition on a substrate separately prepared, and the thickness of the film was measured to be 30 nm.

### (Coating solution for an electron transporting layer)

| | |
|---|---|
| 2,2,3,3-Tetrafluoro-1-propanol | 100 g |
| ET-A | 0.75 g |

Next, the substrate having been prepared until the electron transporting layer was transferred into a vapor deposition apparatus without being exposed to the air and the pressure was reduced to 4 × 10⁻⁴ Pa. Previously, cesium fluoride and aluminium each were respectively placed in tantalum resistance heating boats and they were installed in a vapor deposition apparatus.

First, the resistance heating boat containing cesium fluoride was heated via application of electric current and deposition of cesium fluoride was carried out onto the substrate to form an electron injection layer of cesium fluoride layer having a thickness of 3 nm. Then, the resistance heating boat containing aluminium was heated via application of electric current to produce a cathode made of aluminium having a thickness of 100 nm at a deposition rate of 1 nm/second to 2 nmlsecond.

The substrate having been prepared until the cathode was transferred into a glove box which has a degree of cleanness of 100 measured based on the method of JIS B9920, a dew point of- 80 °C or less, and an oxygen content of 0.8 ppm. Then, it was sealed in a glass sealing can and provided with barium oxide as a desiccating agent to obtain Element 101.

Here, barium oxide used as a desiccating agent was a high purity barium oxide made by Aldrich Co., ltd. This compound was previously adhered to a fluorine type semipermeable film Microtex S-NTF8031Q (made by Nitto Denko Co., Ltd.) provided with an adhesive agent inside of the glass sealing can. A UV curable adhesive agent was used for adhering the sealing can and the organic EL element. Both were adhered by irradiation with UV rays to prepare the sealed element

### <<Preparation of Organic EL element 102>>

Organic EL elements 102 was prepared in the same manner as preparation of organic EL element 101 except that a light emitting layer was prepared as described in the following procedure.

### (Preparation of a light emitting layer for organic EL element 102)

The following coating solution for a light emitting layer was prepared and it was coated under the condition of 1,000 rpm for 30 seconds with a spin coater. Further, it was heated at 150 °C for 30 minutes to produce a light emitting layer. The prepared light emitting layer was subjected to X-ray diffraction measurement. There were observed X-ray diffraction lines and existence of crystal grains was confirmed. The coating was performed under the same condition on a substrate separately prepared, and the thickness of the fihn was measured to be 40 nm.

### (Coating solution for a light emitting layer)

| | |
|---|---|
| Toluene | 100 g |
| H-27 | 1.0 g |
| D-1 | 0.11 g |

### <<Preparation of Organic EL element 103>>

Organic EL elements I 03 was prepared in the same manner as preparation of organic EL element 102 except that the hole transporting layer was prepared as described in the following procedure.

### (Preparation of a hole transporting layer for organic EL element 103)

A substrate provided with an ITO transparent electrode was set to a substrate holder in a commercially available vapor deposition apparatus. After reducing the vacuum degree to 1 × 10⁻⁴ Pa, a melting pot for vapor deposition containing α-NPD was heated via application of electric current Co-deposition was performed at a deposition rate of 0.1 nm/second to prepare a hole transporting layer having a thickness of 30 nm.

### <<Preparation of Organic EL element 104>>

Organic EL element 104 was prepared in the same manner as preparation of organic EL element 102 except that an electron transporting layer was prepared as described in the following procedure.

### (Preparation of an electron transporting layer for organic EL element 104)

The substrate provided with a light emitting layer was set to a substrate holder in a vapor deposition apparatus. After reducing the vacuum degree to 1 × 10⁻⁴ Pa, a melting pot for vapor deposition containing ET-A was heated via application of electric current. Co-deposition was performed at a deposition rate of 0.1 nm/second to prepare an electron transporting layer having a thickness of 30 nm.

### <<Preparation of Organic EL element 105>>

Organic EL elements 105 was prepared in the same manner as preparation of organic EL element 102 except that a light emitting layer was prepared as described in the following procedure.

### (Preparation of a light emitting layer for organic EL element 105)

The following coating solution for a light emitting layer was prepared and it was coated under the condition of 1,000 rpm for 30 seconds with a spin coater. Further, it was heated at 150 °C for 30 minutes to produce a light emitting layer. The prepared light emitting layer was subjected to X-ray diffraction measurement. There were observed X-ray diffraction peaks and existence of crystal grains was confirmed. The coating was performed under the same condition on a substrate separately prepared, and the thickness of the film was measured to be 40 nm.

### (Coating solution for a light emitting layer)

| | |
|---|---|
| Toluene | 100 g |
| H-31 | 1.0 g |
| D-1 | 0.11 g |

### <Evaluation of Organic EL elements 101 to 105>

### <<Evaluation of storage stability>>

After storing each organic EL element under the ambience of 70 °C for 200 hours, it was driven with the fixed current value of 2.5 mA/cm² and the followings were measured: a rate of change in luminance (a ratio of the luminance after storing the organic EL element at 70 °C for 200 hours compared to the luminance of the untreated element being set to be 100%); and a rate of change in driving lifetime (a ratio of the lifetime after storing the organic EL element at 70 °C for 200 hours compared to the lifetime of the untreated element being set to be 100%). These were taken as a scale of storage stability.

The measurement of luminance was done with a spectroradiometric luminance meter CS-1000 (produced by Konica Minolta Sensing Inc.). The front luminance of each organic EL element was measured. In the case of measuring the driving lifetime, the front luminance of 2,000 cd/m² was set as an initial luminance and the change of luminance at continuous driving was measured. The time required for decease in one half of the initial luminance was employed as an index of the driving lifetime

The obtained evaluation results in Example 1 are shown in Table 1.

**Table 1**

| Element No. | Film forming method | | Crystal grains in light emitting layer | Host material | Ratio of luminance after storing at high temperature (%) | Ratio of lifetime after storing at high temperature (%) | Remarks |
|---|---|---|---|---|---|---|---|
| | Hole transporting layer | Electron transporting layer | | | | | |
| 101 | Coating | Coating | None | H-27 | 55 | 65 | Comparison |
| 102 | Coating | Coating | Yes | H-27 | 75 | 80 | Present invention |
| 103 | Vacuum deposition | Coating | Yes | H-27 | 65 | 70 | Present invention |
| 104 | Coating | Vacuum deposition | Yes | H-27 | 75 | 70 | Present invention |
| 105 | Coating | Coating | Yes | H-31 | 70 | 80 | Present invention |

As is clearly shown in Table 1, organic electroluminescence elements of the present invention exhibited high luminance and long driving lifetime even after storing at high temperature. Especially, Organic electroluminescence element 102, which contained crystal grains in the light emitting layer, the light emitting layer, the hole transporting layer and the electron transporting layer were formed with a coating method; and the molecular weight of the host was not more than 800, exhibited high luminance and long driving lifetime even after storing at high temperature.

### Example 2

### <<Preparation of Organic EL element 106>>

An anode was prepared using a polyether sulfone film having a thickness of 200 µm (made by Sumitomo Bakelite Co. Ltd. Hereinafter, it is called as PES) by providing a transparent gas barrier film thereon with an atmospheric plasma polymerization, followed by forming ITO (indium tin oxide) having a thickness of 120 nm on the gas barrier film. The belt flexible belt sheet in roll form was drawn out, then after performing a cleaning surface modification process and an electrostatic charge elimination process, it was rolled up in a roll.

As a cleaning surface modification process in the present Example 2, it was used a dry cleaning surface modification apparatus with a low pressure mercury lamp having a wavelength of 184.9 nm, at irradiation strength of 15 mW/cm² with a irradiation distance of 10 mm.

As an electrostatic charge elimination process in the present Example 2, it was used a discharger using weak X-rays.

On this substrate thus prepared was applied a 70% solution of poly(3,4-ethylenedioxythiphene)-polystyrene sulfonate (PEDOT/PSS, Baytron P A1 4083 made by Bayer AG.) diluted with pure water by using a slot die coater method employing a backup roll having a 3 m diameter at a coating speed of 4 m/minute to form a film. Then, it was dried at 200 °C for one hour to form a hole injection layer having a thickness of 30 nm.

A coating solution for a hole transporting layer was prepared as described below. It was coated by using a slot die coater method employing a backup roll having a 3 m diameter at a coating speed of 4 m/minute to form a hole transporting layer having a dried thickness of 20 nm.

This substrate was heated at 150 °C for 10 seconds, then, while heating, it was irradiated with UV rays of 30 mW/cm² using a high pressure mercury lamp OHD-110M-ST (made by ORC Manufacturing Co., Ltd.) for 20 seconds. Further, it was heated at 120 °C for 30 minutes to form a hole transporting layer.

### (Coating solution for a hole transporting layer)

A coating solution for a hole transporting layer was prepared by dissolving HT-A in an amount of 0.45 mass% and HT-B in an amount of 0.05 mass% in toluene.

Then, a coating solution for a light emitting layer and a coating solution for an electron transporting layer were prepared as described below. The two coating solutions were coated by using a slot die coater method employing a backup roll having a 3 m diameter at a coating speed of 4 m/minute to form respectively a light emitting layer having a dried thickness of 40 nm and an electron transporting layer having a dried thickness of 30 nm.

The coating of a light emitting layer was performed under the same condition on a substrate separately prepared. The prepared light emitting layer was subjected to X-ray diffraction measurement. There were observed X-ray diffraction peaks and existence of crystal grains was confirmed.

### (Coating solution for a light emitting layer)

A coating solution for a light emitting layer was prepared by dissolving H-27 in an amount of 1 mass% and D-1 in an amount of 0.1 mass% in toluene.

### (Coating solution for an electron transporting layer)

A coating solution for a light emitting layer was prepared by dissolving ET-A in an amount of 0.75 mass% in 2,2,3,3-tetrafluoro-1-propanol.

After coating the solvents were removed in a drying process using a heated air flow. From a blowing off opening of slit nozzle type, air was blown at 100 mm height from the formed film with a speed of 1m/s having a width distribution of 5% at drying temperature of 100 °C.

After removal of solvents, the substrate was conveyed with absorbed by being attracted through heat rolls with a temperature of 150 °C closely arranged with each other. The heating treatment of the substrate was carried out by back side heat transfer.

The wound up roll was kept in the storage box and stored under the reduced pressure (10⁻⁶ Pa to 10⁻² Pa).

The substrate having been prepared until the electron transporting layer was transferred into a vapor deposition apparatus in the state of roll and the pressure was reduced to 4 × 10⁻⁴ Pa.

Previously, cesium fluoride and aluminium each were respectively placed in tantalum resistance heating boats and they were installed in the vapor deposition apparatus.

By using a vapor deposition head, cesium fluoride was vapor deposited on the electron transporting layer in a thickness of 3 nm as an electron injection layer.

Then, on the region including the organic EL layer portion and the electrode take out portion, an aluminium layer having a thickness of 100 nm was vapor deposited to form a cathode.

On the other portion used for the electrode in the substrate having been prepared until the cathode, an inorganic layer made of SiOₓ, SiNₓ, or their mixture was provided using a sputtering method, a plasma CVD method or an ion plating method to form a sealing film of 300 nm. It was wound up to prepare Organic EL element 106.

### <<Preparabon of Organic EL element 107>>

Organic EL elements 107 was prepared in the same manner as preparation of organic EL element 106 using a slot die coater method, except that a hole transporting layer, a light emitting layer, and an electron transporting layer were prepared as described in the following procedure.

### (Preparation of a hole transporting layer, a light emitting layer, and an electron transporting layer for Organic EL element 107)

A coating solution for a hole transporting layer was prepared in the same manner as the liquid used in organic EL elements 106. It was coated by using an ink-jet coating method employing a backup roll having a 3 m diameter at a coating speed of 4 m/minute to form a hole transporting layer having a dried thickness of 20 nm. This substrate was heated at 150 °C for 10 seconds, then while heating, it was irradiated with UV rays of 30 mW/cm² using a high pressure mercury lamp OHD-110M-ST (made by ORC Manufacturing Co., Ltd.) for 20 seconds. Further, it was heated at 120 °C for 30 minutes to form a hole transporting layer.

Then, a coating solution for a light emitting layer and a coating solution for an electron transporting layer each prepared in the same manner as the liquids used in organic EL elements 106. They were coated by using an ink-jet coating method employing a backup roll having a 3 m diameter at a coating speed of 4 m/minute to form respectively a light emitting layer having a dried thickness of 40 nm and an electron transporting layer having a dried thickness of 30 nm. The coating of a light emitting layer was performed under the same condition on a substrate separately prepared. The prepared light emitting layer was subjected to X-ray diffraction measurement. There were observed X-ray diffraction peaks and existence of crystal grains was confirmed.

### <<Evaluation of storage stability of Organic EL element 106 and Organic EL element 107>>

Storage stability of Organic EL element 106 and Organic EL element 107 each were evaluated in the same manner as in Example 1.

The obtained evaluation results in Example 1 are shown in Table 2.

**Table 2**

| Element No. | Film forming method | Crystal grains in light emitting layer | Ratio of luminance after storing at high temperature (%) | Ratio of lifetime after storing at high temperature (%) | Remarks |
|---|---|---|---|---|---|
| 101 | Spin coating | None | 55 | 65 | Comparison |
| 102 | Spin coating | Yes | 75 | 80 | Present invention |
| 106 | Slot die coater | Yes | 75 | 90 | Present invention |
| 107 | Ink-jet | Yes | 75 | 85 | Present invention |

From Table 2, it is clear that organic electroluminescence elements prepared by the slot die coater method of the present invention and by the ink-jet coating method of the present invention exhibited further high luminance and long lifetime after storing at high temperature.

From Table 1 and Table 2 as described above, it is clear that Organic EL elements 102 to 107 of the present invention are excellent in luminance and lifetime after storing at high temperature and they can be suitable used for a display device and a lighting device.

Moreover, as is the case with Organic EL elements 102, and 105 to 107 of the present invention, when the layer adjacent to the light emitting layer was prepared with a coating method instead of a vapor deposition method, the organic EL element was demonstrated to be excellent after storage at high temperature. It was shown that it has a useful property for a display device and a lighting device. Further, when the coating method is either a slot die coater method or an ink-jet coating method, the prepared organic EL element has more useful property for a display device and a lighting device.

### DESCRIPTION OF SYMBOLS

- 1:: Support
- 2:: Backup roll
- 10, 20, and 30:: Coating unit
- 11 and 12:: Coater
- 12 and 22:: Liquid-feeding pump
- 13, 23, and 33:: Coating solution tank
- 111 and 211:: Slit
- 31:: Ink-jet
- 311:: Ink-jet head

## Claims

1. An organic electroluminescence element comprising an anode, a cathode and at least one light emitting layer sandwiched between the anode and the cathode as a constituting layer, wherein
the light emitting layer contains a dopant and a host;
crystal grains made of the host are contained in the light emitting layer;
a part of the host is crystallized to form crystal grains;
the crystal grains exhibit an X-ray diffraction peak; and
a degree of crystallization of the crystal grains is 1% to 15%.

2. The organic electroluminescence element of claim 1, wherein the host has a molecular weight of 1,500 or less.

3. The organic electroluminescence element of any one of claims 1 to 2, wherein the host has a molecular weight of 800 or less.

4. The organic electroluminescence element of any one of claims 1 to 3, wherein the host is a compound containing at least three partial structures each represented by Formula (a): 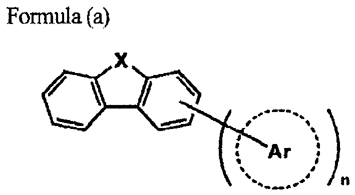 wherein, X represents NR', O, S, CR'R", or SiR'R", provided that R' and R" each represents a hydrogen atom or a substituent; Ar is a group of atoms necessary to form an aromatic ring; and "n" is an integer of 0 to 8.

5. The organic electroluminescence element of any one of claims 1 to 4, wherein the light emitting layer is formed by a wet process.

6. The organic electroluminescence element of any one of claims 1 to 5, wherein at least one layer adjacent to one side of the light emitting layer is formed by a wet method.

7. The organic electroluminescence element of any one of claims 1 to 6, wherein two layers each respectively adjacent to one side of the light emitting layer are formed by a wet method.

8. The organic electroluminescence element of any one of claims 5 to 7, wherein the wet process is an ink-jet coating method.

9. The organic electroluminescence element of any one of claims 5 to 7, wherein the wet process is an slot die coater method.

10. The organic electroluminescence element of any one of claims 1 to 9, wherein the dopant contained in the light emitting layer emits phosphorescence.

11. The organic electroluminescence element of any one of claims 1 to 10, wherein the dopant contained in the light emitting layer is represented by Formula (1): 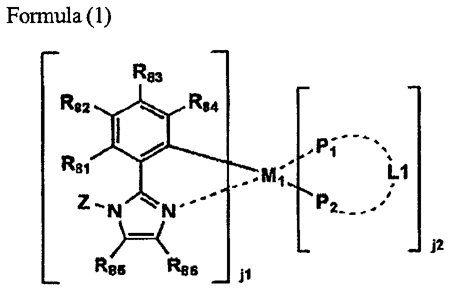 wherein, Z represents a hydrocarbon ring group, an aromatic heterocyclic group, or a heterocyclic group; R₈₁ to R₈₆ each represent a hydrogen atom or a substituent; P1-L1-P₂ represents a bidentate ligand, provided that P₁ and P₂ each independently represent a carbon atom, a nitrogen atom, or an oxygen atom; L1 represents an atomic group which forms a bidentate ligand together with P₁ and P₂; j1 is an integer of 1 to 3, and j2 is an integer of 0 to 2, provided that the sum of j1 and j2 is 2 or 3; and M₁ represents a metal element of Group 8 to Group 10 in the periodic table.

12. The organic electroluminescence element of claim 11, wherein M1 in Formula (1) is iridium.

13. A display device comprising the organic electroluminescence element of any one of claims 1 to 12.

14. A lighting device comprising the organic electroluminescence element of any one of claims 1 to 12.

## Patentansprüche

1. Organisches Elektrolumineszenzelement, umfassend eine Anode, eine Kathode und mindestens eine Licht emittierende Schicht, welche zwischen der Anode und der Kathode als eine konstituierende Schicht eingeklemmt ist, worin die Licht emittierende Schicht ein Dotierungsmittel und eine Hostverbindung enthält;
Kristallkörner aus der Hostverbindung sind in der Licht emittierende Schicht enthalten;
ein Teil der Hostverbindung ist kristallisiert, um die Kristallkörner zu bilden; die Kristallkörner weisen einen Röntgenstrahlbeugungspeak auf; und
ein Grad der Kristallisation der Kristallkörner ist 1 % bis 15 %.

2. Organisches Elektrolumineszenzelement nach Anspruch 1 , worin die Hostverbindung ein Molekulargewicht von 1500 oder weniger aufweist.

3. Organisches Elektrolumineszenzelement nach einem der Ansprüche 1 oder 2, worin die Hostverbindung ein Molekulargewicht von 800 oder weniger aufweist.

4. Organisches Elektrolumineszenzelement nach einem der Ansprüche 1 bis 3, worin die Hostverbindung eine Verbindung ist, welche mindestens drei Teilstrukturen, welche jeweils durch Formel (a) dargestellt werden, enthält 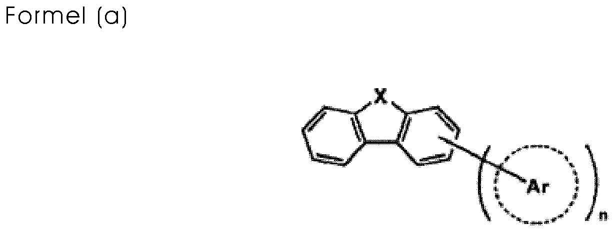 worin X für NR', O, S, CR'R" oder SiR'R" steht, unter der Voraussetzung, dass R' und R" jeweils für ein Wasserstoffatom oder einen Substituenten stehen; Ar eine Gruppe von Atomen ist, welche notwendig ist, um einen aromatischen Ring zu bilden; und "n" eine Zahl von 0 bis 8 ist.

5. Organisches Elektrolumineszenzelement nach einem der Ansprüche 1 bis 4, worin die Licht emittierende Schicht durch ein Nassverfahren gebildet wird.

6. Organisches Elektrolumineszenzelement nach einem der Ansprüche 1 bis 5, worin mindestens eine Schicht, welche zu einer Seite der Licht emittierenden Schicht benachbart ist, durch ein Nassverfahren gebildet wird.

7. Organisches Elektrolumineszenzelement nach einem der Ansprüche 1 bis 6, worin zwei Schichten, welche jeweils zu einer Seite der Licht emittierenden Schicht benachbart sind, durch ein Nassverfahren gebildet werden.

8. Organisches Elektrolumineszenzelement nach einem der Ansprüche 5 bis 7, worin das Nassverfahren ein Verfahren der Tintenstrahlbeschichtung ist.

9. Organisches Elektrolumineszenzelement nach einem der Ansprüche 5 bis 7, worin das Nassverfahren ein Verfahren eines Schlitzdüsenbeschichters ist.

10. Organisches Elektrolumineszenzelement nach einem der Ansprüche 1 bis 9, worin das Dotierungsmittel, welches in der Licht emittierenden Schicht enthalten ist, Phosphoreszenz emittiert.

11. Organisches Elektrolumineszenzelement nach einem der Ansprüche 1 bis 10, worin das Dotierungsmittel, welches in der Licht emittierenden Schicht enthalten ist, durch die Formel (1) dargestellt wird: 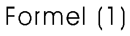 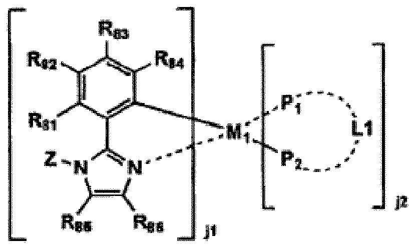 worin Z für eine Kohlenwasserstoffringgruppe, eine aromatische heterocyclische Gruppe oder eine heterocyclische Gruppe steht; R₈₁ bis R₈₆ jeweils für ein Wasserstoffatom oder einen Substituenten stehen; P₁-L1-P₂ für einen bidentanten Liganden steht, unter der Voraussetzung, dass P₁ und P₂ jeweils unabhängig voneinander für ein Kohlenstoffatom, ein Stickstoffatom oder ein Sauerstoffatom stehen; L1 für eine Atomgruppe steht, welche gemeinsam mit P₁ und P₂ einen bidentanten Liganden bildet; j1 eine Zahl von 1 bis 3 ist und j2 eine Zahl von 0 bis 2 ist, unter der Voraussetzung, dass die Summe von j1 und j2 2 oder 3 ist; und M₁ für ein Metallelement der Gruppe 8 bis Gruppe 10 des Periodensystems steht.

12. Organisches Elektrolumineszenzelement nach Anspruch 11, worin M₁ in Formel (1) Iridium ist.

13. Anzeigevorrichtung, umfassend das organische Elektrolumineszenzelement nach einem der Ansprüche 1 bis 12.

14. Beleuchtungsvorrichtung, umfassend das organische Elektrolumineszenzelement nach einem der Ansprüche 1 bis 12.

## Revendications

1. Élément électroluminescent organique comprenant une anode, une cathode et au moins une couche émettrice de lumière coincée entre l'anode et la cathode en tant qu'une couche constituante, dans lequel la couche émettrice contient un dopant et un hôte ;
des grains cristallins faits de l'hôte sont contenus dans la couche émettrice de lumière ;
une partie de l'hôte est cristallisée pour former des grains cristallins ;
les grains cristallins montrent un pic de diffraction des rayons X ; et
le degré de la cristallisation des grains cristallins est 1 % à 15 %.

2. Élément electroluminescent organique selon la revendication 1, dans lequel l'hôte présente une masse moléculaire égale ou inférieure à 1500.

3. Élément électroluminescent organique selon l'une des revendications 1 ou 2, dans lequel l'hôte présente une masse moléculaire égale ou inférieure à 800.

4. Élément électroluminescent organique selon l'une des revendications 1 à 3, dans lequel l'hôte est un composé contenant au moins trois structures partielles, chacun de celles représentée par la formule (a) : 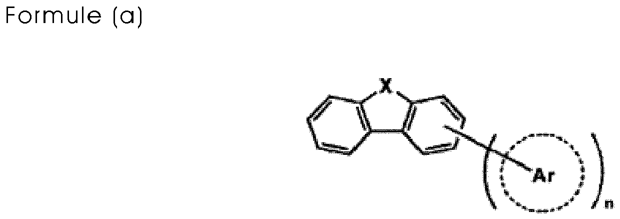 dans laquelle X représente NR', O, S, CR'R" ou SiR'R", à la condition que chacun de R' et R" représente un atome d'hydrogène ou un substituant ; Ar est un groupe des atomes nécessaire pour former un cycle aromatique ; et « n » est un entier de 0 à 8.

5. Élément électroluminescent organique selon l'une des revendications 1 à 4, dans lequel la couche émettrice de lumière est formée par un procédé par voie humide.

6. Élément électroluminescent organique selon l'une des revendications 1 à 5, dans lequel au moins une couche adjacente à une côté de la couche émettrice de lumière est formée par un procédé par voie humide.

7. Élément électroluminescent organique selon l'une des revendications 1 à 6, dans lequel deux couches, chacun respectivement adjacente à une côté de la couche émettrice de lumière, sont formées par un procédé par voie humide.

8. Élément électroluminescent organique selon l'une des revendications 5 à 7, dans lequel le procédé par voie humide est un procédé de revêtement à jet d'encre.

9. Élément électroluminescent organique selon l'une des revendications 5 à 7, dans lequel le procédé par voie humide est un procédé d'enduction à filière plate.

10. Élément électroluminescent organique selon l'une des revendications 1 à 9, dans lequel le dopant contenu dans la couche émettrice de lumière émet de la phosphorescence.

11. Élément électroluminescent organique selon l'une des revendications 1 à 10, dans lequel le dopant contenu dans la couche émettrice de lumière est représenté par la formule (1) : 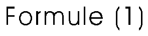 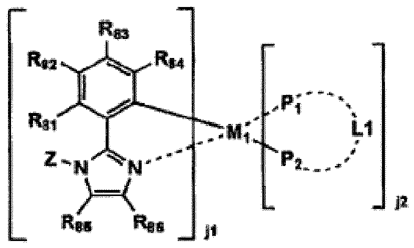 dans laquelle Z représente un groupe d'un cycle d'hydrocarbure, un groupe hétérocyclique aromatique ou un groupe hétérocyclique ; chacun de R₈₁ à R₈₆ représente un atome d'hydrogène ou un substituant ; P₁-L1-P₂ représente un ligand bidentate, à la condition que chacun de P₁ et P₂ représente indépendamment un atome de carbone, un atome d'azote ou un atome d'oxygène ; L1 représente un groupe atomique qui forme un ligand bidentate en coopération avec P₁ et P₂ ; j1 est un entier de 1 à 3 et j2 est un entier de 0 à 2, à la condition que la somme de j1 et j2 soit 2 ou 3 ; et M₁ représente un élément de métal du groupe 8 à 10 du tableau périodique.

12. Élément électroluminescent organique selon la revendication 1 1 , dans lequel M₁ dans la formule (1) est de l'iridium.

13. Dispositif d'affichage comprenant l'élément électroluminescent organique selon l'une des revendications 1 à 12.

14. Dispositif d'éclairage comprenant l'élément électroluminescent organique selon l'une des revendications 1 à 12.
